(19) Europäisches Patentamt
European Patent Office
Office européen des brevets

(11) **EP 4 683 313 A1**

(12) **EUROPEAN PATENT APPLICATION**

(43) Date of publication:
**21.01.2026 Bulletin 2026/04**

(21) Application number: 25188298.1

(22) Date of filing: **09.07.2025**

(51) International Patent Classification (IPC):
***H04N 1/60*** *(2006.01)*

(52) Cooperative Patent Classification (CPC):
**H04N 1/6033; H04N 1/6036; H04N 1/6097**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **18.07.2024 JP 2024114576**

(71) Applicant: **Ricoh Company, Ltd.**
**Tokyo 143-8555 (JP)**

(72) Inventor: **Moriwaki, Atsushi**
**Tokyo, 143-8555 (JP)**

(74) Representative: **SSM Sandmair**
**Patentanwälte Rechtsanwalt**
**Partnerschaft mbB**
**Joseph-Wild-Straße 20**
**81829 München (DE)**

(54) **IMAGE PROCESSING APPARATUS, INFORMATION PROCESSING SYSTEM, IMAGE PROCESSING METHOD, AND CARRIER MEANS**

(57) An image processing apparatus for performing color matching of tone values for a same target color in a first state and a second state, includes: a first acquisition unit that acquires, from a first chart based on a first tone value of a target mixed color in the first state, a first color value of a patch corresponding to the first tone value; a second acquisition unit that acquires, from a second chart based on the first tone value in the second state, a second color value of a patch corresponding to the first tone value; and a correction unit that corrects the first tone value such that a mixed color based on the first tone value in the second state becomes the target mixed color, when a color difference between the second color value and the first color value is greater than or equal to a threshold.

# FIG. 1

## Description

BACKGROUND

Technical Field

The present disclosure relates to an image processing apparatus, an information processing system, an image processing method, and carrier means.

Related Art

A printed material output from an image forming apparatus changes in color over time. To address this issue, color matching is periodically performed. The periodic color matching involves appropriate color matching of grays, which are mixtures of cyan (C), magenta (M), and yellow (Y). In color matching to address a change in mixed color over time, patches of neighboring colors of a color to be matched are output and colorimetric values thereof are acquired to identify the direction of color matching. To ensure the accuracy of color matching, it is desirable to acquire neighboring colors immediately before color matching. However, acquiring neighboring colors every time color matching is performed imposes a large burden on a user to perform color measurement using a colorimeter.

The large burden of such a color measurement operation is caused by the following two factors. The first factor is that since a color near a color to be matched (target color) is to be included in the gamut of neighboring colors that have been output, neighboring colors in a wide color gamut are to be output in order to ensure that such a color is included in the gamut regardless of any change over time. The second factor is that since increasing the prediction accuracy of a color change involves increasing the number of types of colors to be output within a color gamut, in a broader color gamut, a larger number of types of colors are used to satisfy the prediction accuracy.

A method considered to reduce the burden on the user to perform such color measurement is to read color values as RGB (red, green, blue) values from patches by using an inline sensor in an image forming apparatus instead of performing color measurement by using an external spectral colorimeter or the like. The read color values are device-dependent RGB values. To perform a color matching process using Lab values in a manner similar to that for color measurement with a colorimeter, an internal conversion table is used to convert the RGB values into the Lab values.

A technique for maintaining the print density during printing by using RGB values read by such a reading means is employed by an image forming apparatus that sets a density correction value based on read data read by the reading means and print data corresponding to the read data before density correction (for, Japanese Unexamined Patent Application Publication No. 2017-219753).

In the related art, however, it is known that the correspondence relationship between an RGB value and a Lab value greatly varies from one paper characteristic to another, and in the method using the inline sensor as described above, the conversion table described above is created for each paper characteristic. This results in the user performing a color measurement operation on patches by using a colorimeter. In the technique described in Japanese Unexamined Patent Application Publication No. 2017-219753, density correction is performed based on a difference between a target RGB value and a correction-target RGB value. However, it is difficult to determine whether the difference is large enough to perform a correction. Thus, when the difference is not large enough to perform a correction, downtime may occur due to the correction. In addition, overcorrection may cause accuracy deterioration.

SUMMARY

The present disclosure described herein provides an image processing apparatus for performing color matching of tone values acquired for a same target color in a first state and a second state different from the first state. The image processing apparatus includes a first acquisition unit, a second acquisition unit, and a correction unit. The first acquisition unit acquires, from a first chart printed out from an image forming apparatus based on a first tone value of a target mixed color in the first state, a first color value of a patch corresponding to the first tone value read by a reading device included in the image forming apparatus. The first color value is device-dependent. The second acquisition unit acquires, from a second chart printed out from the image forming apparatus based on the first tone value in the second state, a second color value of a patch corresponding to the first tone value read by the reading device. The second color value is device-dependent. The correction unit corrects the first tone value such that a mixed color based on the first tone value in the second state becomes the target mixed color, when a color difference between the second color value and the first color value is greater than or equal to a threshold set as a device-dependent color difference corresponding to a device-independent color difference allowable for the target mixed color.

The present disclosure described herein provides an information processing system including the above-described image processing apparatus and the above-described image forming apparatus.

The present disclosure described herein provides an image processing method for an image processing apparatus to perform color matching of tone values acquired for a same target color in a first state and a second state different from the first state. The image processing method includes acquiring, from a first chart printed out from an image forming apparatus based on a first tone value of a target mixed color in the first state, a first color value of a patch corresponding to the first tone value read by a reading device included in the image forming apparatus, the first color value being device-dependent; acquiring, from a second chart printed out from the image forming apparatus based on the first tone value in the second state, a second color value of a patch corresponding to the first tone value read by the reading device, the second color value being device-dependent; and correcting the first tone value such that a mixed color based on the first tone value in the second state becomes the target mixed color, when a color difference between the second color value and the first color value is greater than or equal to a threshold set as a device-dependent color difference corresponding to a device-independent color difference allowable for the target mixed color.

The present disclosure described herein provides carrier means carrying computer readable code for controlling a computer system to carry out the above-described method.

According to one or more aspects of the present disclosure, the occurrence of downtime can be prevented or reduced, while improving the accuracy of color matching without involving a color measurement operation using an external colorimeter.

BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:

FIG. 1 is a diagram illustrating an example of a general arrangement of an information processing system according to a first embodiment of the present disclosure;

FIGs. 2A and 2B are graphs illustrating a single-color tone reproduction curve (TRC) generation operation of an image processing apparatus according to the first embodiment of the present disclosure;

FIGs. 3A and 3B are graphs illustrating that the correspondence relationship between a Lab value and an RGB value is different for each paper type;

FIGs. 4A and 4B are graphs illustrating an example of a distribution of RGB values read from respective patches having the same tone value for each of a plurality of paper types and a distribution of Lab values measured by an external colorimeter;

FIG. 5 is a graph illustrating an example of color differences, calculated for a plurality of paper types, between RGB values read from a patch having a certain tone value and a patch having a color difference less than or equal to a predetermined Lab color difference from the patch having the certain tone value;

FIG. 6 is a diagram illustrating an example hardware configuration of the image processing apparatus according to the first embodiment of the present disclosure;

FIG. 7 is a diagram illustrating an overview of the structure of an image forming apparatus according to the first embodiment of the present disclosure;

FIG. 8 is a diagram illustrating an example hardware configuration of the image forming apparatus according to the first embodiment of the present disclosure;

FIG. 9 is a diagram illustrating an example configuration of functional blocks of the image processing apparatus according to the first embodiment of the present disclosure;

FIG. 10 is a flowchart illustrating an example of a target gray/neighboring gray acquisition process of the image processing apparatus according to the first embodiment of the present disclosure;

FIG. 11 is a diagram illustrating an example of a target/neighboring chart according to the first embodiment of the present disclosure;

FIG. 12 is a table illustrating an example of tone values and color values of target grays, an allowable color difference value, and a correction threshold;

FIG. 13 is a table illustrating an example of tone values and color values of neighboring grays;

FIG. 14 is a diagram illustrating an example of an operation of a neighboring-color change prediction model;

FIG. 15 is a flowchart illustrating an example of a gray correction process of the image processing apparatus according to the first embodiment of the present disclosure;

FIG. 16 is a diagram illustrating an example of an updated gray chart according to the first embodiment of the present disclosure;

FIG. 17 is a flowchart illustrating an example of a corrected gray tone value calculation process of the image processing apparatus according to the first embodiment of the present disclosure;

FIG. 18 is a diagram illustrating a calculation in the corrected gray tone value calculation process of the image processing apparatus according to the first embodiment of the present disclosure;

FIG. 19 is a table illustrating an example of the tone values of the target grays and corrected tone values;

FIG. 20 is a diagram illustrating an example configuration of functional blocks of an image processing apparatus according to a second embodiment of the present disclosure;

FIG. 21 is a flowchart illustrating an example of a target gray/neighboring gray acquisition process of the image processing apparatus according to the second embodiment of the present disclosure;

FIG. 22 is a diagram illustrating an example of a target/neighboring chart according to the second embodiment of the present disclosure;

FIG. 23 is a table illustrating an example of tone values and color values of neighboring grays and paper white; and

FIG. 24 is a flowchart illustrating an example of a gray correction process of the image processing apparatus according to the second embodiment of the present disclosure.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

An image processing apparatus, an information processing system, an image processing method, and a program according to one or more embodiments of the present disclosure will be described in detail hereinafter with reference to the drawings. The present disclosure, however, is not limited to the following one or more embodiments, and elements of the following one or more embodiments include elements that may be easily conceived by those skilled in the art, those being substantially the same ones, and those being within equivalent ranges. Furthermore, various omissions, substitutions, changes, and combinations of the elements can be made without departing from the gist of the following one or more embodiments.

First Embodiment

General Arrangement of Information Processing System

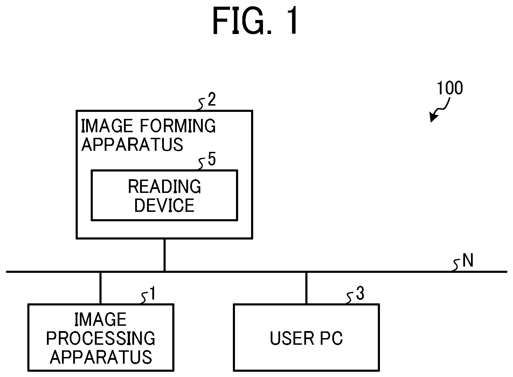

FIG. 1 is a diagram illustrating an example of a general arrangement of an information processing system according to a first embodiment of the present disclosure. The general arrangement of an information processing system 100 according to the present embodiment will be described with reference to FIG. 1.

As illustrated in FIG. 1, the information processing system 100 includes an image processing apparatus 1, an image forming apparatus 2, and a user personal computer (PC) 3. The image processing apparatus 1, the image forming apparatus 2, and the user PC 3 can perform data communication via a network N. The network N is a network such as a local area network (LAN). The network N may be a wired network or a wireless network.

The image processing apparatus 1 is an apparatus that performs color matching (correction process) of gray, which is a mixture of cyan (C), magenta (M), and yellow (Y), on a printed material to be output from the image forming apparatus 2. The image processing apparatus 1 may be, for example, an information processing apparatus such as a generalpurpose PC. In one example, the image forming apparatus 2 is a printing machine for commercial use, and the image processing apparatus 1 is a digital front end (DFE). A mixed color will be described as gray created from the three CMY colors, as described above, as a non-limiting example. A secondary color or any other mixed color may be used.

The image forming apparatus 2 is an apparatus that prints out an image based on image data output from the user PC 3 and subjected to image processing by the image processing apparatus 1. The image forming apparatus 2 is, for example, an electrophotographic printer or a multifunction peripheral (MFP). As illustrated in FIG. 1, the image forming apparatus 2 includes a reading device 5, which is an inline sensor.

The reading device 5 is an inline sensor included in the image forming apparatus 2 to read a chart printed out from the image forming apparatus 2. The reading device 5 transmits color values of RGB (red, green, blue) (i.e., RGB values) in an RGB color space obtained by reading the chart to the image processing apparatus 1.

The user PC 3 is an information processing apparatus that transmits image data to be printed to the image processing apparatus 1.

Single-Color TRC Generation Operation

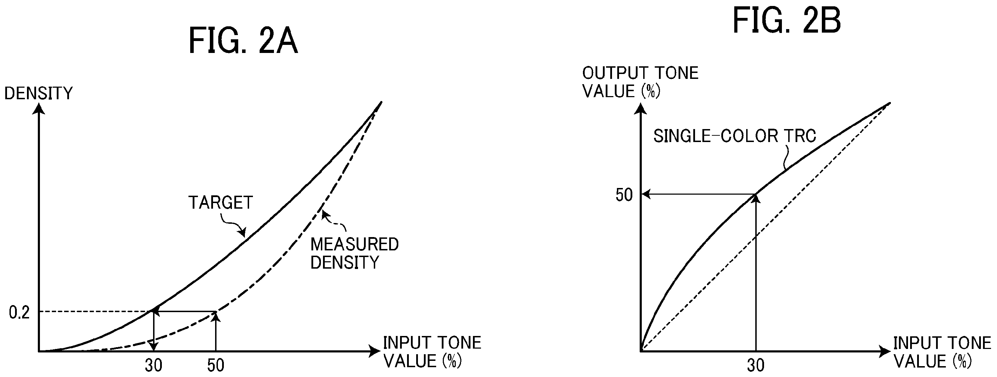

FIGs. 2A and 2B are graphs illustrating a single-color tone reproduction curve (TRC) generation operation of an image processing apparatus according to the first embodiment of the present disclosure. The single-color TRC generation operation of the image processing apparatus 1 according to the present embodiment will be described with reference to FIGs. 2A and 2B.

Conventional image processing using an electrophotographic method involves correction of the tone value of a single color, namely, cyan (C), magenta (M), yellow (Y), or black (K). Such correction is referred to as single-color calibration. FIGs. 2A and 2B illustrate a process for generating a single-color TRC in single-color calibration. The single-color TRC is generated at the new creation time and the update time. At the new creation time (an example of a first state), a single-color TRC is generated for a single color, namely, cyan, magenta, or yellow as follows. The image forming apparatus 2 prints a chart including patches obtained by modulating the tone value for the single color in stages from 0% to 100%. As illustrated in FIG. 2A, the image processing apparatus 1 creates a density target for input tone values from the measured densities of the patches. As illustrated in FIG. 2B, the image processing apparatus 1 generates a single-color TRC for converting an input tone value into an output tone value to match the target.

Actually, however, when printing is performed by the image forming apparatus 2 using the tone values of the target illustrated in FIG. 2A, with the passage of time, or a change in the environment, or the like, the density is measured as a density that is not on the curve of the target but on a "measured density" curve illustrated in FIG. 2A, and deviates from the curve of the target. For example, as illustrated in FIG. 2A, according to the curve of the target, the density is ideally measured to be 0.2 when a patch is printed with the 30% tone value of a certain single color, but the density is not actually measured to be 0.2 unless the patch is printed with the 50% tone value. In this case, as illustrated in FIG. 2B, the image processing apparatus 1 generates a single-color TRC such that the designated 30% tone value (input tone value) is converted into the 50% tone value (output tone value). Accordingly, the designated 30% tone value (input tone value) is converted into the 50% tone value by the single-color TRC, and a patch is printed using the 50% tone value. Thus, the density of the patch can be measured to be 0.2. The single-color TRC is also applied to the subsequent printing of typical image data from the image forming apparatus 2, to manage the single color.

Also at the update time (an example of a second state), the image forming apparatus 2 prints a chart, and the image processing apparatus 1 updates the single-color TRC such that the density measured for the patch matches the target created at the new creation time. Accordingly, the density target for each single color created at the new creation time is reproduced at the update time.

Although the single-color calibration guarantees the color reproducibility of a single color over time or under environmental changes or the like, the color reproducibility of a mixed color created by combining such single colors over time or under environmental changes or the like is not guaranteed even when the single-color calibration is performed. To address such inconvenience, in addition to the single-color calibration, the correction of a mixed color created by combining cyan (C), magenta (M), yellow (Y), and black (K) is performed. In particular, gray, which is created from cyan (C), magenta (M), and yellow (Y) in a three-color mixture, is frequently used and appears greatly different to the human eye even with a minute change. Thus, gray correction specialized for gray may be performed. While the gray correction will be described in the present embodiment, the gray correction is also applicable to secondary colors or mixed colors created by mixing colors also including black (K).

Overview of Gray Correction Process

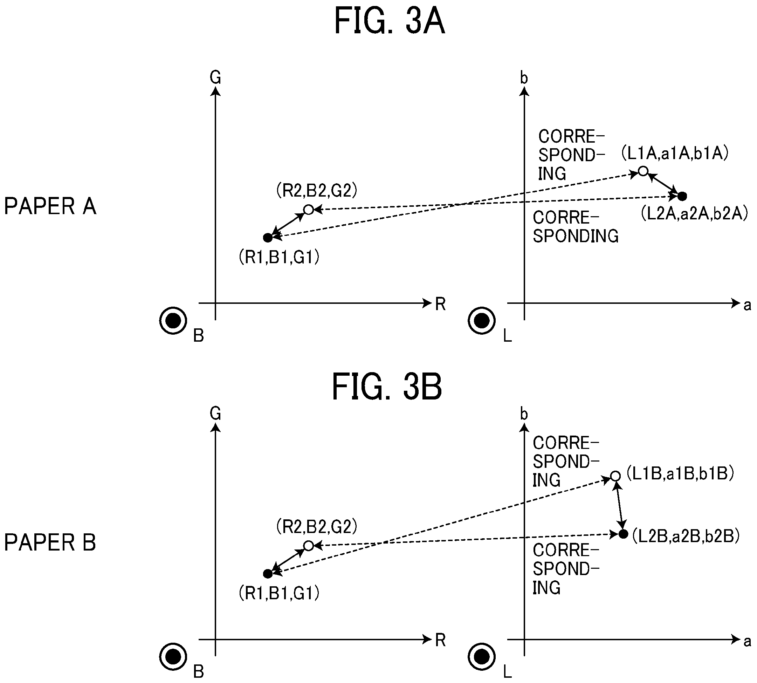

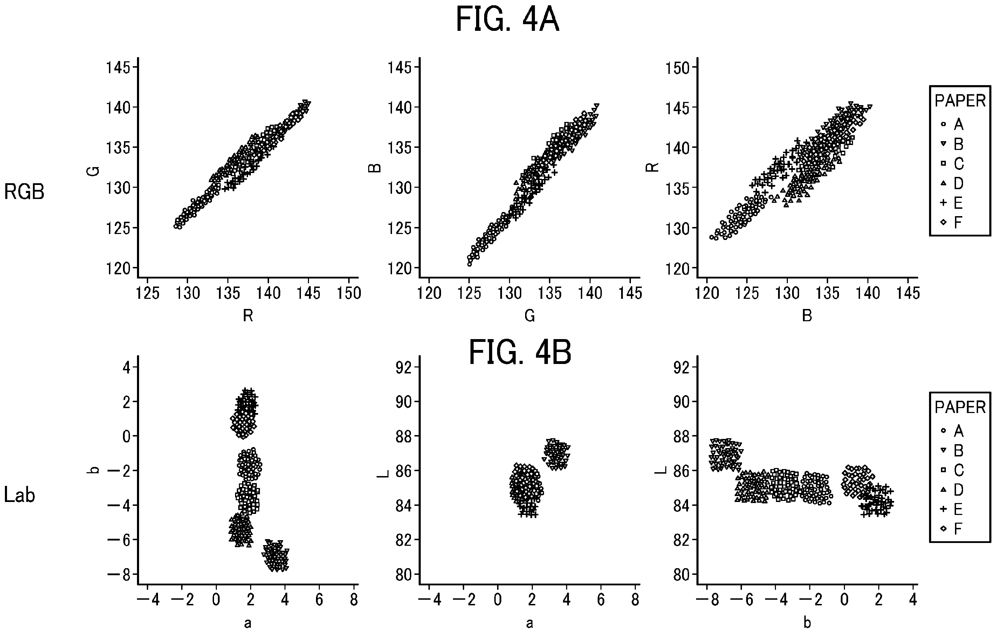

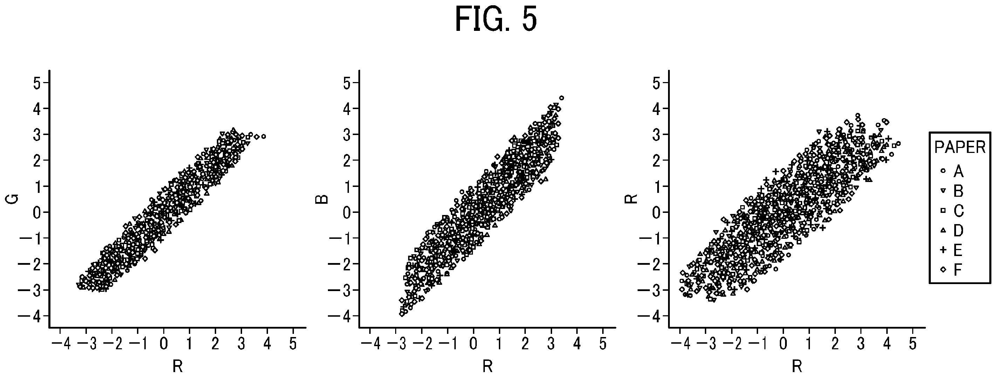

FIGs. 3A and 3B are graphs illustrating that the correspondence relationship between a Lab value and an RGB value is different for each paper type. FIGs. 4A and 4B are graphs illustrating an example of a distribution of RGB values read from respective patches having the same tone value for each of a plurality of paper types and a distribution of Lab values measured by an external colorimeter. FIG. 5 is a graph illustrating an example of color differences, calculated for a plurality of paper types, between RGB values read from a patch having a certain tone value and a patch having a color difference less than or equal to a predetermined Lab color difference from the patch having the certain tone value. An overview of the gray correction process will be described with reference to FIGs. 3A, 3B, 4A, 4B, and 5.

The single-color calibration can be implemented by simple correction since the tone of the target color is the tone of one color, whereas the gray correction involves correcting three colors simultaneously since the tone of the target color includes toners of three colors. For this reason, a typical method is to print patches of grays obtained by mixing cyan (C), magenta (M), and yellow (Y) in proportions that gradually change with respect to correction-target gray, that is, patches of neighboring grays of the correction-target gray, by using an image forming apparatus, acquire color values obtained by measuring the colors of the patches, predict a change in color when the proportions of cyan (C), magenta (M), and yellow (Y) are changed, and identify a color matching the target color. Such a typical method ensures that the range of a color gamut formed by the neighboring grays to be printed includes a color obtained by changing the tone of the target color over time or under environmental changes or the like. To ensure that a color obtained by changing the tone of the target color is included regardless of any changes over time, environmental changes, or the like, neighboring grays in a broad color gamut are printed. Since it is not practical to print all the neighboring grays in the color gamut, some of the neighboring grays are not printed, and such unprinted neighboring grays are predicted by interpolation from the measured color values of neighboring grays that are printed. However, the interpolation may cause a prediction error that affects the correction accuracy. Thus, there are several combinations of proportions in which cyan (C), magenta (M), and yellow (Y) are combined to create the neighboring grays to be printed in order to achieve high correction accuracy to some extent. As the color gamut of the neighboring grays to be printed becomes broader, the number of combinations of proportions in which cyan (C), magenta (M), and yellow (Y) are combined is increased in order to maintain sufficient prediction accuracy. This results in a large number of patches of neighboring grays being printed.

Considering that a color obtained by changing the proportions of cyan (C), magenta (M), and yellow (Y) changes over time, it is desirable to print the patches of the neighboring grays at the same time as the correction is performed. However, if both the correction-target gray and the neighboring grays are printed each time the correction is performed, during color measurement, the user measures the colors of a large number of patches by using an external colorimeter, which imposes a large burden on the user.

In a recent technique for addressing this issue, an inline sensor that can read an image is installed on a conveyance path of printed materials in an image forming apparatus and a value read by the inline sensor is used to perform the correction. Such an image forming apparatus saves the user from having to perform a color measurement operation. However, a spectral sensor equivalent to an external colorimeter, when used as the inline sensor, increases cost. Thus, an RGB sensor that can read RGB values is typically used as the inline sensor. The RGB values read by the RGB sensor are device-dependent values and are not accurate color values. Thus, color correction using the RGB sensor typically involves converting the RGB values into device-independent values such as Lab values before performing processing. It is considered that such conversion is performed using a conversion table or the like incorporated in advance.

As illustrated in FIG. 3A, when an RGB value of a patch of a certain color read from paper A is (R1, B1, G1), the corresponding Lab value is consistently (L1A, a1A, b1A), and when an RGB value of a patch of another color read from the paper A is (R2, B2, G2), the corresponding Lab value is consistently (L2A, a2A, b2A). As illustrated in FIG. 3B, for a patch for which the same RGB value (R1, B1, G1) as that in the paper A is read from sheet B, the corresponding Lab value is consistently (L1B, a1B, b1B), and, for a patch for which the same RGB value (R2, B2, G2) as that in the paper A is read from the sheet B, the corresponding Lab value is consistently (L2B, a2B, b2B).

FIGs. 4A and 4B illustrate a distribution of read RGB values of respective gray patches having the same tone value for each of six paper types in an inline sensor for reading RGB values (FIG. 4A) and a distribution of colorimetric Lab values obtained by an external spectral colorimeter (FIG. 4B). As illustrated in FIGs. 4A and 4B, for example, the RGB values themselves are substantially the same for paper B and paper F, whereas the Lab values corresponding to the RGB values are different between the paper B and the paper F. As described above, even when the same RGB value is read by the inline sensor, the corresponding Lab value is different between paper types. In this case, it is difficult for the conversion table incorporated in advance to guarantee the same conversion accuracy for all paper types. Accordingly, to maintain high conversion accuracy, color measurement by the external spectral colorimeter and reading by the inline sensor are performed on the same patch once for each paper type, and then a conversion table is created for each paper type from the RGB value and the Lab value. This results in the user having to measure the colors of a large number of patches even using the inline sensor.

As described below, the image forming apparatus 2 according to the present embodiment does not perform the correction when the color difference between a target gray and a correction-target gray is less than or equal to a predetermined threshold. A focus is placed here on the color difference. As described above, for different paper types, the Lab value corresponding to the RGB value is different. For the same paper type, a certain RGB value consistently corresponds to the same Lab value in a one-to-one relationship. Whether to perform the correction is determined using a determination as to whether the color difference in Lab value (Lab color difference) between the target gray and the correction-target gray is greater than or equal to a threshold, and the Lab color difference is fixed regardless of the paper type and the elapsed time. As described above, since the correspondence relationship between an RGB value and a Lab value for the same paper type is consistently constant, the color difference in RGB value (RGB color difference) corresponding to the Lab color difference is consistently constant for the same paper type. That is, a threshold for the RGB color difference corresponding to a threshold for the Lab color difference is held as a fixed value for each paper type before it is determined whether to perform the correction. Thus, RGB values alone can be handled to determine whether to perform the correction. Actually, for a patch having a certain tone value (C, M, Y) and for a patch having a tone value (C', M', Y') for which the Lab color difference is less than or equal to a predetermined threshold, the difference between a read RGB value (R, G, B) for the patch having the certain tone value (C, M, Y) and a read RGB value (R', G', B') for the patch having the tone value (C', M', Y') is calculated for each of six paper types. The calculated difference is illustrated in FIG. 5. As illustrated in FIG. 5, whereas the Lab color differences are in a range less than or equal to the predetermined threshold for the six paper types, the range of the RGB color differences is substantially the same regardless of the paper type. Conventionally, since Lab color values are used to determine whether to perform the correction, the user performs a color measurement operation on patches by using an external colorimeter for each paper type in order to create a conversion table to be used to determine whether to perform the correction. In contrast, the present embodiment describes details of the information processing system 100 that can improve the accuracy of color matching without involving a color measurement operation using an external colorimeter.

Hardware Configuration of Image Processing Apparatus

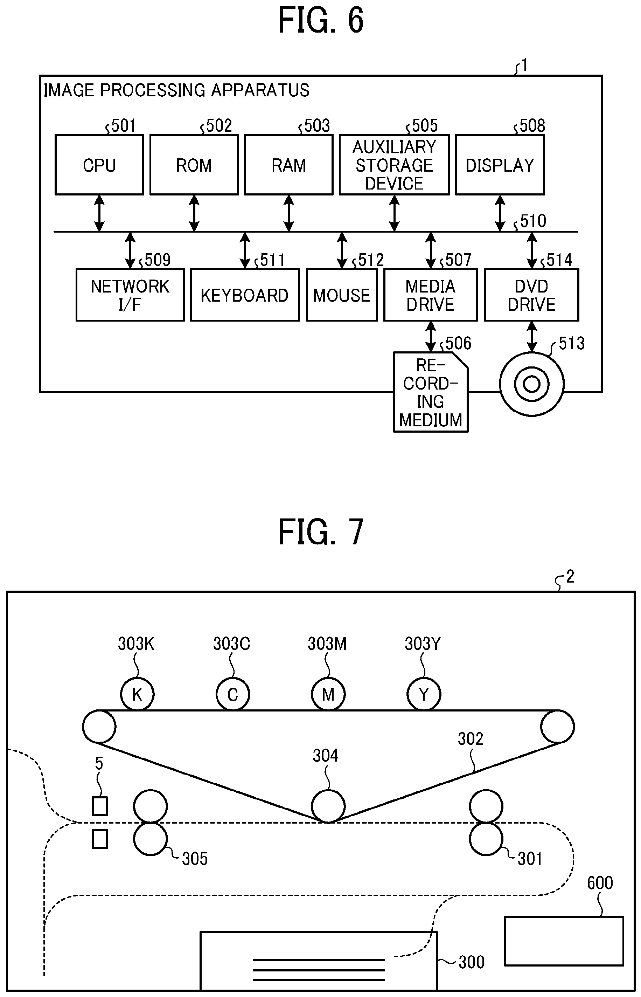

FIG. 6 is a diagram illustrating an example hardware configuration of the image processing apparatus according to the first embodiment of the present disclosure. The hardware configuration of the image processing apparatus 1 according to the present embodiment will be described with reference to FIG. 6.

As illustrated in FIG. 6, the image processing apparatus 1 includes a central processing unit (CPU) 501, a read only memory (ROM) 502, a random access memory (RAM) 503, an auxiliary storage device 505, a media drive 507, a display 508, a network interface (I/F) 509, a keyboard 511, a mouse 512, and a digital versatile disc (DVD) drive 514.

The CPU 501 is an arithmetic processor that controls the overall operation of the image processing apparatus 1. The ROM 502 is a non-volatile storage device that stores a program initially executed by the CPU 501. Examples of such a program include an initial program loader (IPL). The RAM 503 is a volatile storage device used as a work area for the CPU 501.

The auxiliary storage device 505 is a non-volatile storage device that stores various data such as a program. Examples of the auxiliary storage device 505 include a hard disk drive (HDD) and a solid state drive (SSD).

The media drive 507 is a device that controls reading or writing of data from or to a recording medium 506 such as a flash memory.

The display 508 displays various types of information such as a cursor, a menu, a window, text, or an image. Examples of the display 508 include a liquid crystal display (LCD) and an organic electro-luminescence (EL) display.

The network I/F 509 is an interface for performing data communication via the network N. As one example, the network I/F 509 is a network interface card (NIC) or the like that enables communication using a protocol such as the transmission control protocol/Internet protocol (TCP/IP). The network I/F 509 may be a communication interface having a wireless communication function based on a standard such as Wireless Fidelity (Wi-Fi®).

The keyboard 511 is one example of an input device provided with a plurality of keys for inputting characters, numerical values, various instructions, or the like. The mouse 512 is a type of input device operated by a user to select or execute various instructions, select a target for processing, and move a cursor being displayed, for example.

The DVD drive 514 is a device that controls reading or writing of various data from or to a DVD 513, which is an example of a removable storage medium. Examples of the DVD 513 include a digital versatile disc rewritable (DVD-RW), a digital versatile disc recordable (DVD-R), a compact disc rewritable (CD-RW), and a compact disc recordable (CD-R).

The CPU 501, the ROM 502, the RAM 503, the auxiliary storage device 505, the media drive 507, the display 508, the network I/F 509, the keyboard 511, the mouse 512, and the DVD drive 514 described above are communicably connected to each other via a bus line 510 such as an address bus and a data bus.

The hardware configuration of the image processing apparatus 1 illustrated in FIG. 6 is an example. Not all of the components described above may be included in the image processing apparatus 1, and the image processing apparatus 1 may include any other component. The user PC 3 has a hardware configuration similar to that illustrated in FIG. 6. Overview of Structure of Image Forming Apparatus

FIG. 7 is a diagram illustrating an overview of the structure of an image forming apparatus according to the first embodiment of the present disclosure. An overview of the structure of the image forming apparatus 2 according to the present embodiment will be described with reference to FIG. 7.

The image forming apparatus 2 illustrated in FIG. 7 is a printing apparatus such as a tandem MFP, for example. As illustrated in FIG. 7, the image forming apparatus 2 includes a paper feed tray 300, conveyance rollers 301, an intermediate transfer belt 302, photoconductor drums 303C, 303M, 303Y, and 303K, a transfer roller 304, a fixing roller 305, a controller 600, and the reading device 5.

The paper feed tray 300 is a tray in which recording media such as paper to be fed are stored.

The conveyance rollers 301 are a pair of rollers that convey a recording medium fed from the paper feed tray 300 to the transfer roller 304 along a conveyance path.

The intermediate transfer belt 302 is an endless belt on which an intermediate transfer image is to be formed by the photoconductor drums 303C, 303M, 303Y, and 303K. The intermediate transfer belt 302 rotates clockwise as viewed in FIG. 7, and toner images of the respective colors are formed on the photoconductor drums 303K, 303C, 303M, and 303Y in this order.

The photoconductor drum 303C is a photoconductor drum for forming a cyan color toner image on the intermediate transfer belt 302. The photoconductor drum 303M is a photoconductor drum for forming a magenta color toner image on the intermediate transfer belt 302. The photoconductor drum 303Y is a photoconductor drum for forming a yellow color toner image on the intermediate transfer belt 302. The photoconductor drum 303K is a photoconductor drum for forming a black color toner image on the intermediate transfer belt 302. The photoconductor drums 303K, 303C, 303M, and 303Y are arranged in this order from the upstream side in the rotation direction of the intermediate transfer belt 302 to form an intermediate transfer image on the intermediate transfer belt 302. Thus, toner images of the respective colors are formed on the surface of the intermediate transfer belt 302, and as a result, a full-color image is formed as the intermediate transfer image. The photoconductor drums 303C, 303M, 303Y, and 303K are individually or collectively referred to as a "photoconductor drum 303" or the "photoconductor drums 303". While the photoconductor drums 303 are configured to use the CMYK colors as process colors, the photoconductor drums 303 may use the CMY colors as process colors, or may use red (R), blue (B), and green (G) as process colors instead of the CMY colors.

The transfer roller 304 is a roller for transferring the intermediate transfer image (full-color image) formed on the intermediate transfer belt 302 onto a recording medium conveyed by the conveyance rollers 301. With the function of the transfer roller 304, a full-color image is formed (printed) on the recording medium.

The fixing roller 305 is a roller for fixing the full-color image formed on the recording medium to the recording medium.

The reading device 5 is an inline sensor that is disposed downstream of the fixing roller 305 in the conveyance path of paper and reads the paper to obtain an RGB value. The RGB value read by the reading device 5 is transmitted to the image processing apparatus 1 through the controller 600.

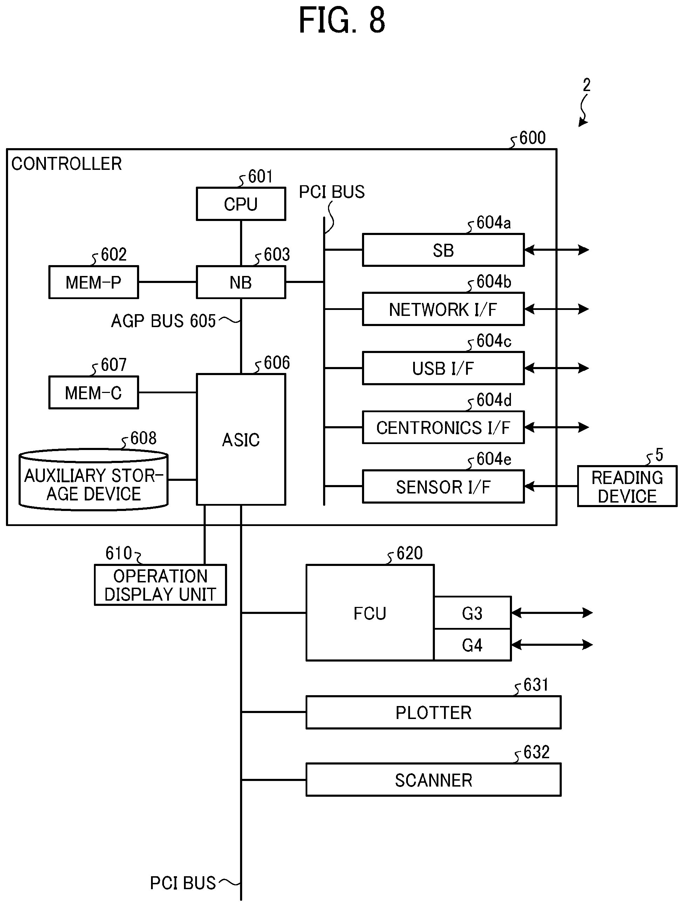

The controller 600 is a control device that controls the overall operation of the image forming apparatus 2. The hardware configuration of the controller 600 will be described below with reference to FIG. 8.

Hardware Configuration of Image Forming Apparatus

FIG. 8 is a diagram illustrating an example hardware configuration of the image forming apparatus according to the first embodiment of the present disclosure. The hardware configuration of the image forming apparatus 2 will be described with reference to FIG. 8.

As illustrated in FIG. 8, the image forming apparatus 2 includes the controller 600, an operation display unit 610, a facsimile control unit (FCU) 620, a plotter 631, and a scanner 632. The controller 600, the operation display unit 610, the FCU 620, the plotter 631, and the scanner 632 are interconnected via a peripheral component interconnect (PCI) bus.

The controller 600 is a device that controls the overall operation of the image forming apparatus 2. For example, the controller 600 controls drawing, communication, and input from the operation display unit 610.

The operation display unit 610 is a device that receives an input to the controller 600 (input function) and displays the state of the image forming apparatus 2 and other information on the image forming apparatus 2 (display function). Examples of the operation display unit 610 include a touch panel. The operation display unit 610 is directly connected to an application specific integrated circuit (ASIC) 606 described below.

The FCU 620 is a device that implements a facsimile function, and is connected to the ASIC 606 via, for example, the PCI bus.

The plotter 631 is a device that implements a printing function. The plotter 631 is connected to the ASIC 606 via, for example, the PCI bus. The plotter 631 corresponds to the intermediate transfer belt 302, the photoconductor drums 303, and the transfer roller 304 illustrated in FIG. 7.

The scanner 632 is a device that implements a scanner function, and is connected to the ASIC 606 via, for example, the PCI bus.

As illustrated in FIG. 8, the controller 600 includes a CPU 601, a system memory (MEM-P) 602, a northbridge (NB) 603, a southbridge (SB) 604a, a network I/F 604b, a Universal Serial Bus (USB) I/F 604c, a Centronics I/F 604d, a sensor I/F 604e, the ASIC 606, a local memory (MEM-C) 607, and an auxiliary storage device 608.

The CPU 601 is an arithmetic processor device that controls the overall operation of the image forming apparatus 2. The CPU 601 is connected to a chipset including the system memory 602, the northbridge 603, and the southbridge 604a and is connected to another device via the chipset.

The system memory 602 is used as a memory for storing programs and data, a memory for loading programs and data, and a memory for storing drawing data of a printer, for example. The system memory 602 includes a ROM and a RAM. The ROM is a read-only memory for storing programs and data. The RAM is a random-access memory, or in other words, a writable and readable memory used as a memory for loading programs and data and a memory for storing drawing data of the printer, for example.

The northbridge 603 is a bridge for connecting the CPU 601 to the system memory 602, the southbridge 604a, and an accelerated graphics port (AGP) bus 605. The northbridge 603 includes a memory controller that controls reading and writing of data from and to the system memory 602. The northbridge 603 further includes a PCI master and an AGP target.

The southbridge 604a is a bridge for connecting the northbridge 603 to PCI devices and peripheral devices. The southbridge 604a is connected to the northbridge 603 via a PCI bus, and the PCI bus is connected to the network I/F 604b, the USB I/F 604c, the Centronics I/F 604d, and the sensor I/F 604e, for example. The reading device 5 described above is connected to, for example, the sensor I/F 604e.

The AGP bus 605 is a bus interface for a graphics accelerator card to accelerate graphics processing. The AGP bus 605 can speed up the graphics accelerator card by directly accessing the system memory 602 with high throughput.

The ASIC 606 is an integrated circuit (IC) for use in image processing and includes hardware elements for image processing. The ASIC 606 serves as a bridge for connecting the AGP bus 605, the PCI bus, the auxiliary storage device 608, and the local memory 607 to each other. The ASIC 606 includes a PCI target, an AGP master, an arbiter (ARB) as a core of the ASIC 606, a memory controller, a plurality of direct memory access controllers (DMACs), and a PCI unit. The memory controller controls the local memory 607. The DMACs are configured to, for example, rotate image data with a hardware logic. The PCI unit transfers data to the plotter 631 and the scanner 632 via a PCI bus. The ASIC 606 is connected to, for example, the FCU 620, the plotter 631, and the scanner 632 via a PCI bus.

The local memory 607 is used as a copy image buffer and a code buffer.

The auxiliary storage device 608 is a storage device such as an HDD, an SSD, a Secure Digital (SD) card, or a flash memory, and is a storage for storing image data, programs, font data, and forms.

The hardware configuration of the image forming apparatus 2 illustrated in FIG. 8 is an example. Not all of the components described above may be included in the image forming apparatus 2, and the image forming apparatus 2 may include any other component. In one example, the image forming apparatus 2 includes an automatic document feeder (ADF). Configuration and Operation of Functional Blocks of Image Processing Apparatus

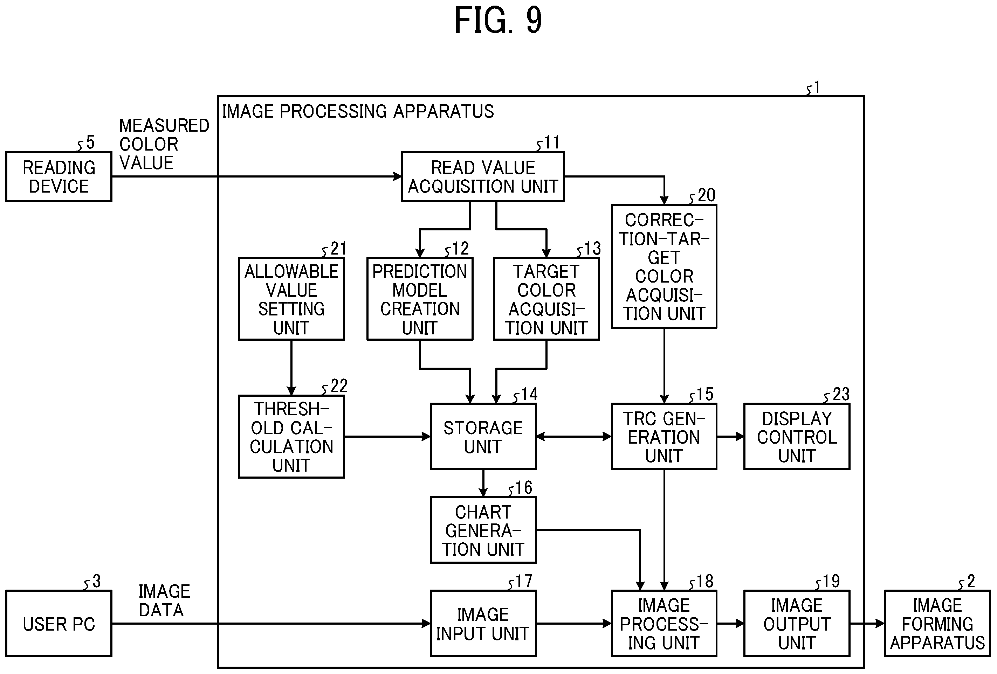

FIG. 9 is a diagram illustrating an example configuration of functional blocks of the image processing apparatus according to the first embodiment of the present disclosure. The configuration and operation of the functional blocks of the image processing apparatus 1 according to the present embodiment will be described with reference to FIG. 9.

As illustrated in FIG. 9, the image processing apparatus 1 includes a read value acquisition unit 11, a prediction model creation unit 12 (an example of a fourth acquisition unit), a target color acquisition unit 13 (an example of a first acquisition unit), a storage unit 14, a TRC generation unit 15 (an example of a correction unit), a chart generation unit 16, an image input unit 17, an image processing unit 18, an image output unit 19, a correction-target color acquisition unit 20 (an example of a second acquisition unit), an allowable value setting unit 21 (an example of a setting unit), a threshold calculation unit 22 (an example of a calculation unit), and a display control unit 23.

The read value acquisition unit 11 is a functional unit that acquires color values (RGB values) via the network I/F 509. The color values (RGB values) are read by the reading device 5 for a chart printed by the image forming apparatus 2. The read value acquisition unit 11 is implemented by, for example, the CPU 501 illustrated in FIG. 6 executing a program.

The prediction model creation unit 12 is a functional unit that creates a neighboring-color change prediction model to predict a color value from a tone value (CMY value) of a color, based on the color value acquired by the read value acquisition unit 11. The prediction model creation unit 12 creates, as the neighboring-color change prediction model, for example, a model for converting a tone value into a color value by using a matrix or a polynomial. The prediction model creation unit 12 may create a neighboring-color change prediction model serving as a learning model by a learning process based on supervised learning or the like. The prediction model creation unit 12 creates a neighboring-color change prediction model for each tone value of target grays described below, and stores the neighboring-color change prediction model in the storage unit 14. The prediction model creation unit 12 is implemented by, for example, the CPU 501 illustrated in FIG. 6 executing a program.

The target color acquisition unit 13 is a functional unit that acquires, from the color values acquired by the read value acquisition unit 11, color values of target colors (target single colors) of single colors, namely, cyan (C), magenta (M), and yellow (Y), and a color value of a target color (target gray or target mixed color) of gray, which is a mixed color. The target color acquisition unit 13 stores the acquired color values of the target single colors and the target gray in the storage unit 14. The target color acquisition unit 13 is implemented by, for example, the CPU 501 illustrated in FIG. 6 executing a program.

The storage unit 14 is a functional unit that stores the neighboring-color change prediction models, various TRCs, and the like. The storage unit 14 is implemented by the RAM 503 or the auxiliary storage device 505 illustrated in FIG. 6.

The correction-target color acquisition unit 20 is a functional unit that acquires the color value of a patch corresponding to an updated gray described below from the color values acquired from the chart by the read value acquisition unit 11. The correction-target color acquisition unit 20 is implemented by, for example, the CPU 501 illustrated in FIG. 6 executing a program.

The TRC generation unit 15 is a functional unit that generates single-color TRCs, based on the color values of the target single colors acquired by the target color acquisition unit 13 and the tone values of the target single colors stored in the storage unit 14. Further, the TRC generation unit 15 generates gray-corrected single-color TRCs, based on the tone value of the target gray stored in the storage unit 14, the color value of the updated gray acquired by the correction-target color acquisition unit 20, and the neighboring-color change prediction models. The details of the single-color TRCs and the gray-corrected single-color TRCs will be described below. As described below, the single-color TRCs are each a one-dimensional conversion curve for converting an input tone value into an output tone value. The updated gray refers to a gray that has changed from the target gray due to changes over time, environmental changes, or the like. The TRC generation unit 15 is implemented by, for example, the CPU 501 illustrated in FIG. 6 executing a program.

The chart generation unit 16 is a functional unit that generates a chart image to be used to acquire the color value of the target gray, create the neighboring-color change prediction models, and to perform a gray correction process. The chart generation unit 16 is implemented by, for example, the CPU 501 illustrated in FIG. 6 executing a program.

The image input unit 17 is a functional unit that receives input of image data transmitted from the user PC 3 via the network I/F 509. The image input unit 17 is implemented by, for example, the CPU 501 illustrated in FIG. 6 executing a program.

The image processing unit 18 is a functional unit that converts the image data input from the image input unit 17 and the tone values in the chart image generated by the chart generation unit 16 into tone values in a format that can be printed out from the image forming apparatus 2 by using TRCs (single-color TRCs or gray-corrected single-color TRCs). The image processing unit 18 is implemented by, for example, the CPU 501 illustrated in FIG. 6 executing a program.

The image output unit 19 is a functional unit that outputs data on which image processing has been performed by the image processing unit 18 to the image forming apparatus 2 via the network I/F 509 to print out the data. The image output unit 19 is implemented by, for example, the CPU 501 illustrated in FIG. 6 executing a program.

The allowable value setting unit 21 is a functional unit that sets a value (allowable color difference value) allowable as a color difference between the Lab value of the updated gray and the Lab value of the target gray in response to an operation input to the keyboard 511 and the mouse 512. That is, the set allowable color difference value is a value for each paper type. The allowable value setting unit 21 stores the set allowable color difference value in the storage unit 14. The allowable value setting unit 21 is implemented by, for example, the CPU 501 illustrated in FIG. 6 executing a program.

The threshold calculation unit 22 is a functional unit that calculates a threshold for determining whether to perform the correction from the allowable color difference value set by the allowable value setting unit 21 by using a conversion formula, a conversion table, or the like for converting a Lab value into an RGB value. The threshold for determining whether to perform the correction may be hereinafter also referred to as a "correction threshold". That is, the calculated correction threshold is a value for each paper type. The threshold calculation unit 22 stores the calculated correction threshold in the storage unit 14. The threshold calculation unit 22 is implemented by, for example, the CPU 501 illustrated in FIG. 6 executing a program.

The display control unit 23 is a functional unit that controls a display operation of the display 508. The display control unit 23 causes the display 508 to display, for example, the single-color TRCs generated by the TRC generation unit 15 and the content of correction made in the process of generating the gray-corrected single-color TRCs. The display control unit 23 is implemented by, for example, the CPU 501 illustrated in FIG. 6 executing a program.

The read value acquisition unit 11, the prediction model creation unit 12, the target color acquisition unit 13, the correction-target color acquisition unit 20, the TRC generation unit 15, the chart generation unit 16, the image input unit 17, the image processing unit 18, the image output unit 19, the allowable value setting unit 21, the threshold calculation unit 22, and the display control unit 23 of the image processing apparatus 1 illustrated in FIG. 9 are not limited to being implemented by the CPU 501 illustrated in FIG. 6 executing a program. For example, the read value acquisition unit 11, the prediction model creation unit 12, the target color acquisition unit 13, the correction-target color acquisition unit 20, the TRC generation unit 15, the chart generation unit 16, the image input unit 17, the image processing unit 18, the image output unit 19, the allowable value setting unit 21, the threshold calculation unit 22, and the display control unit 23 of the image processing apparatus 1 illustrated in FIG. 9 may be implemented by hardware such as integrated circuits or by a combination of software and hardware.

The functional units of the image processing apparatus 1 illustrated in FIG. 9 are conceptually illustrated functions and are not limited to the illustrated components. For example, a plurality of functional units that are illustrated as independent functional units of the image processing apparatus 1 illustrated in FIG. 9 may be combined into one functional unit. Alternatively, a function of one of the functional units of the image processing apparatus 1 illustrated in FIG. 9 may be divided into a plurality of functions to form a plurality of functional units. Furthermore, the functional units of the image processing apparatus 1 are not necessarily configured as distinct software modules as the blocks illustrated in FIG. 9 so long as the functions of the functional units are implemented as a whole by the image processing apparatus 1 executing a program.

Target Gray/Neighboring Gray Acquisition Process of Image Processing Apparatus

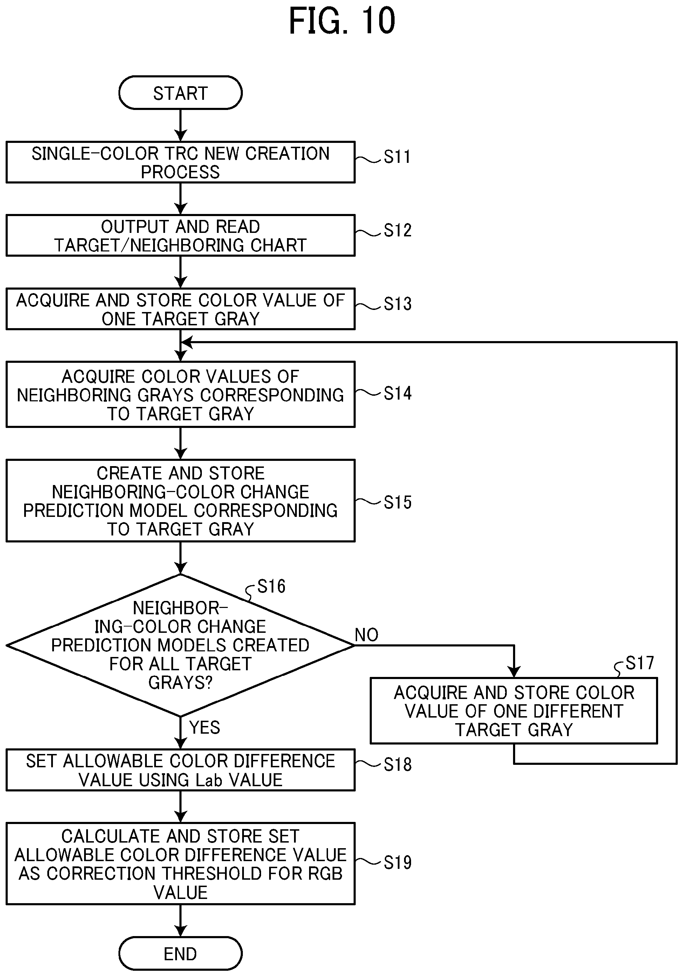

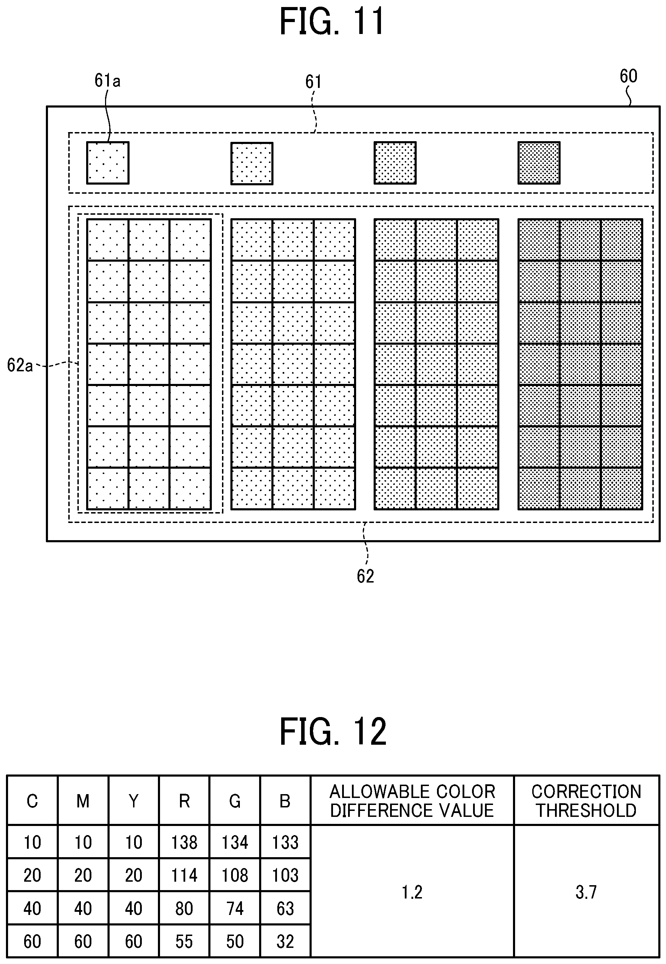

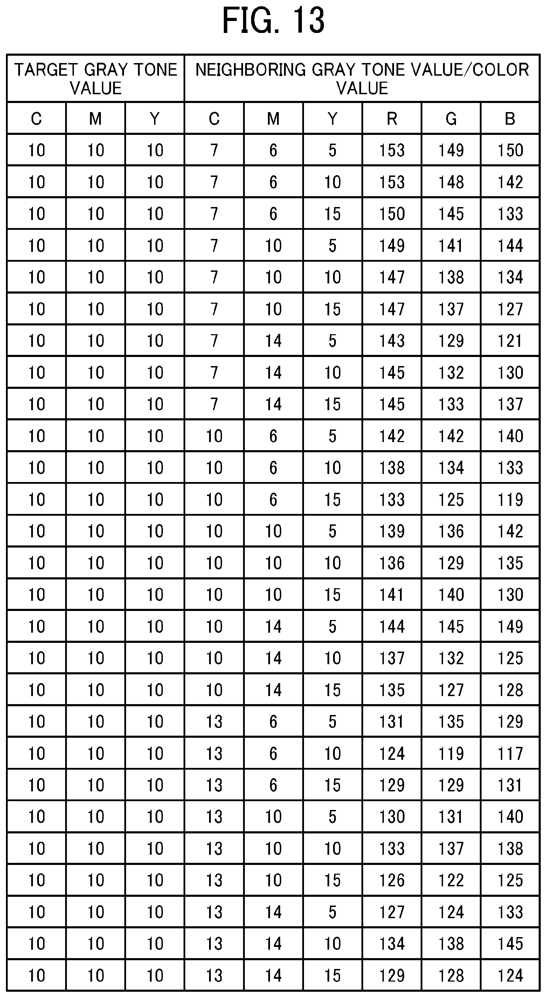

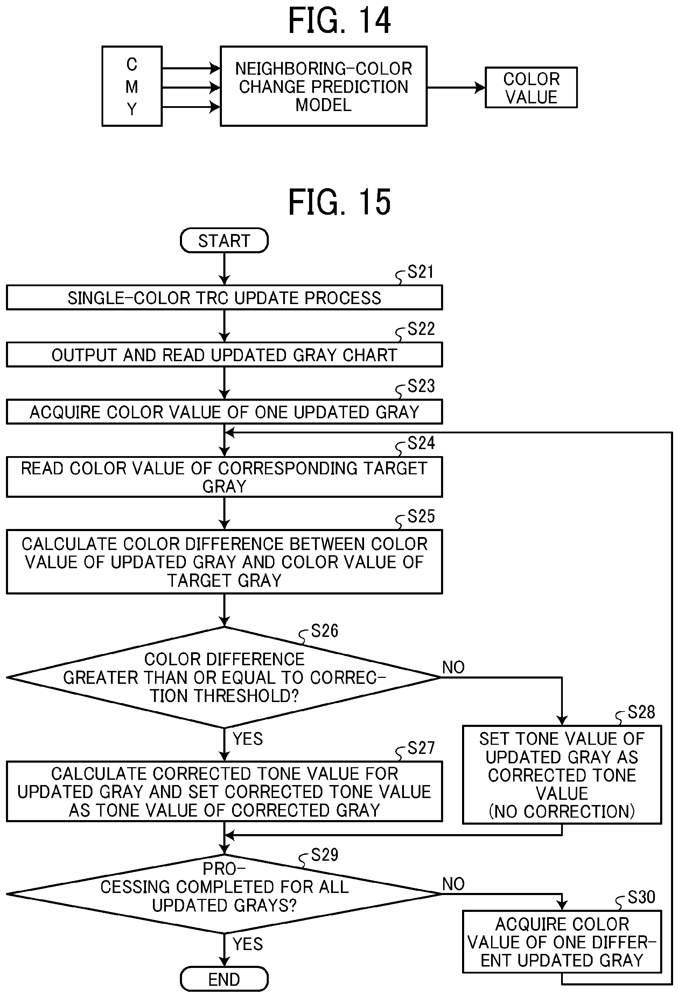

FIG. 10 is a flowchart illustrating an example of a target gray/neighboring gray acquisition process of the image processing apparatus according to the first embodiment of the present disclosure. FIG. 11 is a diagram illustrating an example of a target/neighboring chart according to the first embodiment of the present disclosure. FIG. 12 is a table illustrating an example of tone values and color values of target grays, an allowable color difference value, and a correction threshold. FIG. 13 is a table illustrating an example of tone values and color values of neighboring grays. FIG. 14 is a diagram illustrating an example of an operation of a neighboring-color change prediction model. The target gray/neighboring gray acquisition process of the image processing apparatus 1 according to the present embodiment will be described with reference to FIGs. 10 to 14.

Step S11

First, the TRC generation unit 15 of the image processing apparatus 1 generates (newly creates) single-color TRCs through the single-color calibration described above. The time of new creation of single-color TRCs corresponds to the "first state" according to the present disclosure. Then, the TRC generation unit 15 stores the generated single-color TRCs in the storage unit 14. The present embodiment is based on the assumption that the tone values have been subjected to tone correction using the single-color TRCs. Thus, the single-color calibration may be implemented in any way. Then, the process proceeds to step S12.

Step S12

Then, the chart generation unit 16 of the image processing apparatus 1 generates a target/neighboring chart 60 (an example of a first chart) as illustrated in, for example, FIG. 11 in accordance with, for example, an operation through the user PC 3.

As illustrated in FIG. 11, the target/neighboring chart 60 includes a patch group 61 and a patch group 62. The patch group 61 is a group of patches 61a of target grays, each printed out with any tone value equal for cyan, magenta, and yellow (i.e., C = M = Y), where the tone value is not equal to 0, and a tone value equal to 0 for black (K). The tone values of the patches 61a correspond to the "first tone value" according to the present disclosure. The patch group 62 is a set of patch sub-groups 62a of neighboring grays, each printed out with tone values (second tone value) obtained by modulating the tone value of any one or more of cyan (C), magenta (M), and yellow (Y) in a predetermined color gamut range with respect to the tone value of a respective one of the patches 61a in the patch group 61. For example, a given patch 61a is a patch with C = M = Y = 10%. In this case, the patch sub-group 62a corresponding to the given patch 61a is a group of neighboring gray patches with tone values assigned in the range of ±3% for cyan (C), ±4% for magenta (M), and ±5% for yellow (Y) with respect to C = M = Y = 10%. Thus, while the colors of the patches in each of the patch sub-groups 62a are depicted in the same pattern in FIG. 11, more specifically, the patches have different tone values in the ranges described above.

The arrangement of the patches in the target/-neighboring chart 60 is also not limited, and each patch is arranged in any location such that the color values of the target grays and the neighboring grays can be accurately measured.

Then, the image processing unit 18 of the image processing apparatus 1 performs color conversion on the target/neighboring chart 60 generated by the chart generation unit 16 by using the single-color TRCs generated by the TRC generation unit 15. The image output unit 19 of the image processing apparatus 1 causes the image forming apparatus 2 to perform printing based on the target/neighboring chart 60 on which the color conversion has been performed. The reading device 5 performs a reading process on the target/neighboring chart 60 that has been printed out. Then, the read value acquisition unit 11 of the image processing apparatus 1 acquires the color values (RGB values) of the patches in the target/-neighboring chart 60 read by the reading device 5. Then, the process proceeds to step S13.

Step S13

The target color acquisition unit 13 of the image processing apparatus 1 acquires a color value (first color value) of one target gray (hereinafter referred to as target gray of interest) among the color values of the patches in the target/neighboring chart 60 acquired by the read value acquisition unit 11, and stores the acquired color value in the storage unit 14 as a color value corresponding to the tone value of the target gray of interest. FIG. 12 illustrates an example of the color values and the tone values of the target grays acquired by the read value acquisition unit 11. Then, the process proceeds to step S14.

Step S14

Then, the prediction model creation unit 12 of the image processing apparatus 1 acquires color values (fourth color value) of neighboring grays of the patch sub-groups 62a corresponding to the target gray of interest among the color values of the patches in the target/neighboring chart 60 acquired by the read value acquisition unit 11, and stores the acquired color value in the storage unit 14. FIG. 13 illustrates an example of the tone values of the target gray of interest and the tone values and the color values of the neighboring grays corresponding to the target gray of interest. Then, the process proceeds to step S15.

Step S15

Then, the prediction model creation unit 12 creates a neighboring-color change prediction model corresponding to the target gray of interest, based on the correspondence relationship between the tone values and the color value of the target gray of interest and the correspondence relationship between the tone values and the color values of a plurality of neighboring grays corresponding to the target gray of interest, and stores the neighboring-color change prediction model in the storage unit 14.

FIG. 14 illustrates the operation of the neighboring-color change prediction model. The neighboring-color change prediction model is a model that receives tone values C, M, and Y as inputs and outputs a color value (RGB value) predicted to be reproduced by the image forming apparatus 2. As the function for implementing the neighboring-color change prediction model, a function commonly used as a color change prediction model, such as a multiple regression equation, a neural network, or interpolation using a direct lookup table, may be used.

Then, the process proceeds to step S16.

Step S16

The prediction model creation unit 12 determines whether the neighboring-color change prediction models corresponding to all the target grays have been created. If the neighboring-color change prediction models corresponding to all the target grays have been created (step S16: Yes), the process proceeds to step S18. If the neighboring-color change prediction models corresponding to all the target grays have not been created (step S16: No), the process proceeds to step S17.

Step S17

The target color acquisition unit 13 sets one different target gray as a target gray of interest, acquires the color value of the target gray of interest among the color values of the patches in the target/neighboring chart 60 acquired by the read value acquisition unit 11, and stores the acquired color value in the storage unit 14 as a color value corresponding to the tone values of the target gray of interest. Then, the process proceeds to step S14.

Step S18

The allowable value setting unit 21 sets a value (allowable color difference value) allowable as a color difference between the Lab value of the updated gray and the Lab value of the target gray in response to an operation input to the keyboard 511 and the mouse 512 by the user. The allowable value setting unit 21 stores the set allowable color difference value in the storage unit 14. FIG. 12 illustrates an example of an allowable color difference value set in association with the tone values and the color values of the target grays. Then, the process proceeds to step S19.

Step S19

Then, the threshold calculation unit 22 calculates a correction threshold for determining whether to perform the correction, from the allowable color difference value set by the allowable value setting unit 21, by using a conversion formula, a conversion table, or the like for converting a Lab value into an RGB value. The threshold calculation unit 22 stores the calculated correction threshold in the storage unit 14. FIG. 12 illustrates an example of a correction threshold calculated in association with the tone values and the color values of the target grays and the allowable color difference value. The conversion formula and the conversion table may be unique, or the conversion table or the term in the conversion formula may be switched using paper information such as the paper type (e.g., coated paper or uncoated paper) or the paper thickness of the target/neighboring chart 60. While one allowable color difference value and one correction threshold are set and calculated, the allowable color difference value and the correction threshold may be set and calculated individually for each target gray. Then, the target gray/neighboring gray acquisition process ends.

Gray Correction Process of Image Processing Apparatus

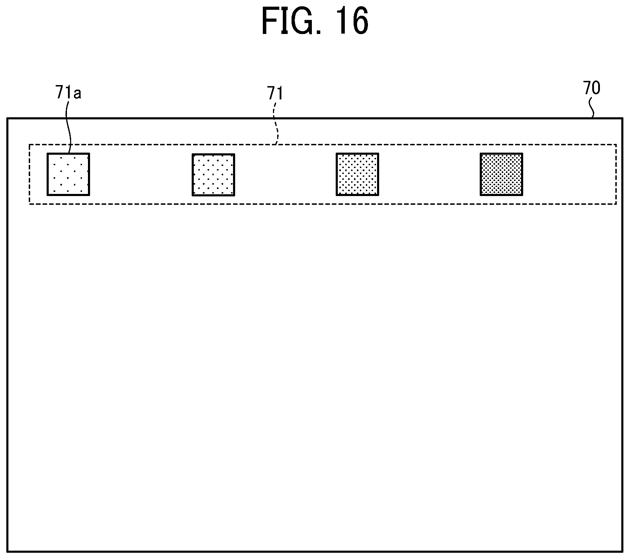

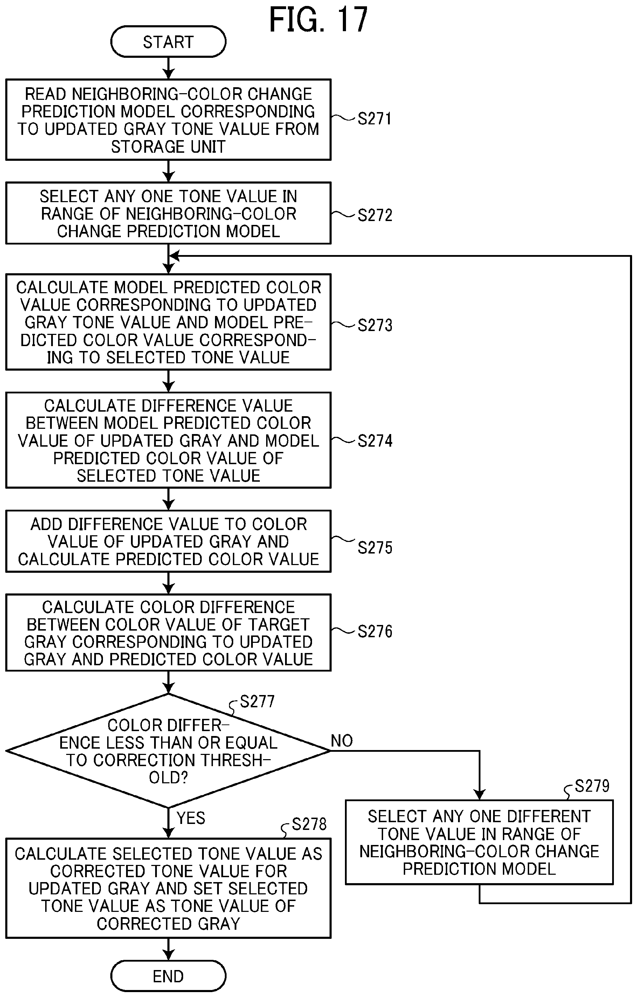

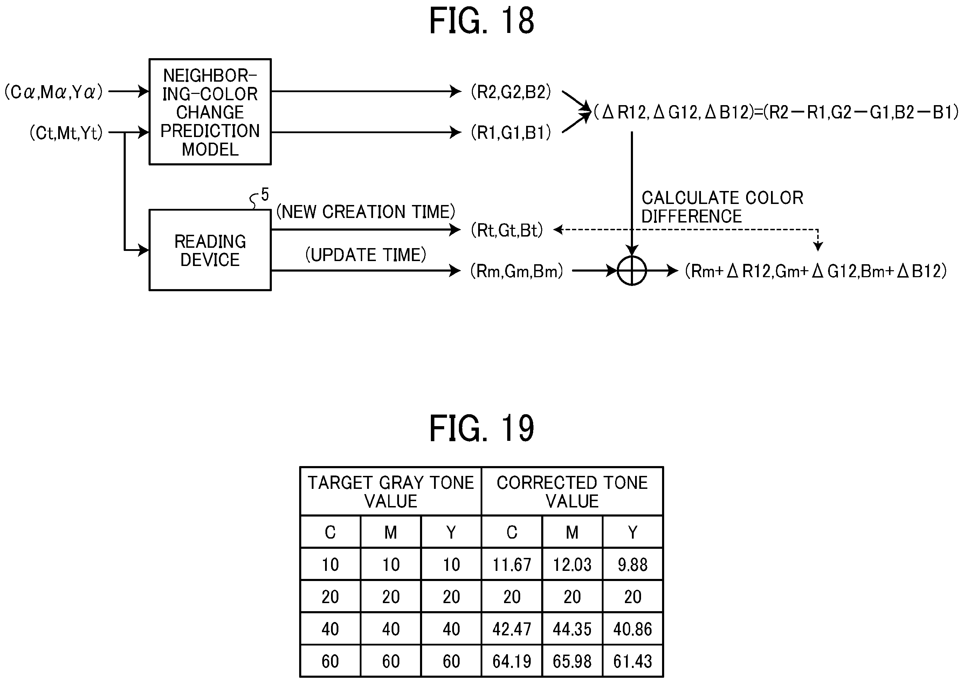

FIG. 15 is a flowchart illustrating an example of a gray correction process of the image processing apparatus according to the first embodiment of the present disclosure. FIG. 16 is a diagram illustrating an example of an updated gray chart according to the first embodiment of the present disclosure. FIG. 17 is a flowchart illustrating an example of a corrected gray tone value calculation process of the image processing apparatus according to the first embodiment of the present disclosure. FIG. 18 is a diagram illustrating a calculation in the corrected gray tone value calculation process of the image processing apparatus according to the first embodiment of the present disclosure. FIG. 19 is a table illustrating an example of the tone values of the target grays and corrected tone values. The gray correction process of the image processing apparatus 1 according to the present embodiment will be described with reference to FIGs. 15 to 19.

Step S21

When a color printed on a recording medium is assumed to have changed due to the passage of a sufficient amount of time from the process of newly creating single-color TRCs described above or due to changes in the environment, the following process is executed in response to the operation by the user. First, the TRC generation unit 15 of the image processing apparatus 1 again generates single-color TRCs through the single-color calibration described above. Then, the TRC generation unit 15 stores the generated single-color TRCs in the storage unit 14 to update the single-color TRCs. The time of update of the single-color TRCs corresponds to the "second state" according to the present disclosure. Then, the process proceeds to step S22.

Step S22

Then, the chart generation unit 16 of the image processing apparatus 1 generates an updated gray chart 70 (an example of a second chart) as illustrated in, for example, FIG. 16 in accordance with, for example, an operation through the user PC 3.

As illustrated in FIG. 16, the updated gray chart 70 includes a patch group 71. The patch group 71 is a group of patches 71a of updated grays printed out with the same tone values as those of the patches 61a in the patch group 61 of the target/neighboring chart 60 illustrated in FIG. 11 described above.

The arrangement of the patches in the updated gray chart 70 is also not limited, and each patch is arranged in any location such that the color values of the updated grays can be accurately measured.

Then, the image processing unit 18 of the image processing apparatus 1 performs color conversion on the updated gray chart 70 generated by the chart generation unit 16 by using the single-color TRCs generated by the TRC generation unit 15. The image output unit 19 of the image processing apparatus 1 causes the image forming apparatus 2 to perform printing based on the updated gray chart 70 on which the color conversion has been performed. The reading device 5 performs a reading process on the updated gray chart 70 that has been printed out. Then, the read value acquisition unit 11 of the image processing apparatus 1 acquires the color values of the patches 71a in the updated gray chart 70 read by the reading device 5. Then, the process proceeds to step S23.

Step S23

The correction-target color acquisition unit 20 of the image processing apparatus 1 acquires the color value (second color value) of one updated gray (hereinafter referred to as an updated gray of interest) among the color values of the patches 71a in the updated gray chart 70 acquired by the read value acquisition unit 11. Then, the process proceeds to step S24.

Step S24

The TRC generation unit 15 of the image processing apparatus 1 reads, from the storage unit 14, the color value and the tone value of the target gray corresponding to the updated gray of interest, that is, the color value and the tone value of the target gray having the same tone value as the updated gray of interest. Then, the process proceeds to step S25.

Step S25

The TRC generation unit 15 calculates a color difference (RGB color difference) between the color value of the updated gray of interest acquired by the correction-target color acquisition unit 20 and the color value of the target gray corresponding to the updated gray of interest read from the storage unit 14. Then, the process proceeds to step S26.

Step S26

The TRC generation unit 15 determines whether the calculated color difference (RGB color difference) is greater than or equal to the correction threshold calculated by the threshold calculation unit 22. If the color difference is greater than or equal to the correction threshold (step S26: Yes), the process proceeds to step S27. If the color difference is less than the correction threshold (step S26: No), the process proceeds to step S28.

Step S27

Through the processing of steps S271 to S279 illustrated in FIG. 17, the TRC generation unit 15 calculates a corrected tone value for the target gray corresponding to the updated gray of interest, and stores the corrected tone value for the target gray in the storage unit 14 as the tone value of the corrected gray corresponding to the target gray. The processing of steps S271 to S279 is described below.

Step S271

The TRC generation unit 15 reads, from the storage unit 14, the neighboring-color change prediction model corresponding to the target gray corresponding to the updated gray of interest. Then, the process proceeds to step S272.

Step S272

Then, the TRC generation unit 15 selects any one tone value $(C\alpha, M\alpha, Y\alpha)$ in the gradation range of the acquired neighboring-color change prediction model. Then, the process proceeds to step S273.

Step S273

As illustrated in FIG. 18, the TRC generation unit 15 calculates a model predicted color value (R1, G1, B1) (first predicted color value) from the tone value (Ct, Mt, Yt) of the updated gray of interest, by using the acquired neighboring-color change prediction model. The model predicted color value (R1, G1, B1) is a color value predicted from the tone value (Ct, Mt, Yt). As illustrated in FIG. 18, the TRC generation unit 15 further calculates a model predicted color value (R2, G2, B2) (second predicted color value) from the selected tone value $(C\alpha, M\alpha, Y\alpha)$, by using the acquired neighboring-color change prediction model. The model predicted color value (R2, G2, B2) is a color value predicted from the tone value $(C\alpha, M\alpha, Y\alpha)$. Then, the process proceeds to step S274.

Step S274

Then, as illustrated in FIG. 18, the TRC generation unit 15 calculates a difference value $(\Delta R12, \Delta G12, \Delta B12)$ between the model predicted color value (R1, G1, B1) and the model predicted color value (R2, G2, B2), that is, $(\Delta R12, \Delta G12, \Delta B12) = (R2 - R1, G2 - G1, B2 - B1)$. Then, the process proceeds to step S275.

Step S275

Then, as illustrated in FIG. 18, the TRC generation unit 15 adds the calculated difference value

($\Delta$R12, $\Delta$G12, $\Delta$B12) to the color value (Rm, Gm, Bm) of the updated gray of interest acquired by the correction-target color acquisition unit 20 and calculates a predicted color value (Rm + $\Delta$R12, Gm + $\Delta$G12, Bm + $\Delta$B12). Then, the process proceeds to step S276.

Step S276

Then, as illustrated in FIG. 18, the TRC generation unit 15 calculates a color difference (RGB color difference) between the calculated predicted color value (Rm + $\Delta$R12, Gm + $\Delta$G12, Bm + $\Delta$B12) and the color value (Rt, Gt, Bt) of the target gray read from the storage unit 14. Then, the process proceeds to step S277.

Step S277

The TRC generation unit 15 determines whether the calculated color difference (RGB color difference) is less than or equal to the correction threshold calculated by the threshold calculation unit 22. If the color difference is less than or equal to the correction threshold (step S277: Yes), the process proceeds to step S278. If the color difference exceeds the correction threshold (step S277: No), the process proceeds to step S279.

Step S278

The TRC generation unit 15 calculates the selected tone value (C$\alpha$, M$\alpha$, Y$\alpha$) as the corrected tone value for the target gray corresponding to the updated gray of interest, and stores the calculated tone value (C$\alpha$, M$\alpha$, Y$\alpha$) in the storage unit 14 as the tone value of the corrected gray corresponding to the target gray. Specifically, the TRC generation unit 15 corrects the tone value such that the updated gray of interest based on the tone value of the target gray in the "second state" becomes the target gray. More specifically, the TRC generation unit 15 sets, as a corrected value for the tone value (Ct, Mt, Yt), the tone value (C$\alpha$, M$\alpha$, Y$\alpha$) such that a difference between the color value (Rt, Gt, Bt) of the target gray and a value obtained by adding a difference between the model predicted color value (R1, G1, B1) predicted from the tone value of the target gray and the model predicted color value (R2, G2, B2) predicted from the selected tone value (C$\alpha$, M$\alpha$, Y$\alpha$) to the color value (Rm, Gm, Bm) of the updated gray of interest is less than or equal to the correction threshold. Then, the process proceeds to step S29.

Step S279

The TRC generation unit 15 selects one tone value (C$\alpha$, M$\alpha$, Y$\alpha$) different from the selected tone value in the gradation range of the acquired neighboring-color change prediction model. Then, the process proceeds to step S273.

Step S28

The TRC generation unit 15 calculates the tone value of the updated gray of interest (i.e., the tone value of the corresponding target gray) as a corrected tone value corresponding to the target gray, and stores the corrected tone value in the storage unit 14. In other words, the TRC generation unit 15 performs no correction on the tone value of the target gray. Then, the process proceeds to step S29.

Step S29

The TRC generation unit 15 determines, for each of all the updated grays, whether the calculation of the color difference between the color value of the updated gray and the color value of the corresponding target gray and the determination based on the correction threshold (the processing of steps S24 to S28) have been completed. If the processing has been completed for all the updated grays (step S29: Yes), the display control unit 23 of the image processing apparatus 1 causes the display 508 to display, for example, the corrected tone values for the target grays calculated by the TRC generation unit 15. FIG. 19 illustrates an example of the tone values of the target grays and the corrected tone values. In the example illustrated in FIG. 19, for a target gray with a tone value of 20% for cyan, magenta, and yellow (i.e., C = M = Y = 20%), the color difference is determined to be less than the correction threshold in step S26 described above, and no correction is to be made to the tone value of the target gray. Thus, the corrected tone values are also 20% for cyan, magenta, and yellow (i.e., C = M = Y = 20%). Then, the gray correction process ends. On the other hand, if the processing has not been completed (step S29: No), the process proceeds to step S30.

Step S30

The correction-target color acquisition unit 20 acquires, as the color value of a new updated gray of interest, the color value of one updated gray different from the acquired updated gray among the color values of the patches 71a in the updated gray chart 70 acquired by the read value acquisition unit 11. Then, the process proceeds to step S24.

When the gray correction process ends, the TRC generation unit 15 reflects the corrected tone values calculated in steps S27 and S28 in the single-color TRCs generated in step S21 to generate single-color TRCs (gray-corrected single-color TRCs), and updates the single-color TRCs stored in the storage unit 14. Then, when the image processing unit 18 executes a calibration process using the single-color TRCs (gray-corrected single-color TRCs), the input tone values are converted into output tone values.

As described above, in the image processing apparatus 1 according to the present embodiment, the target color acquisition unit 13 acquires a device-dependent first color value of a patch corresponding to a tone value read by the reading device 5 included in the image forming apparatus 2 from the target/neighboring chart 60 printed out from the image forming apparatus 2 based on the tone value of a target gray at the new creation time (first state), and the correction-target color acquisition unit 20 acquires a device-dependent second color value of a patch corresponding to the tone value read by the reading device 5 from the updated gray chart 70 printed out from the image forming apparatus 2 based on the tone value of the target gray at the update time (second state). When the color difference between the second color value and the first color value is greater than or equal to a correction threshold set as a device-dependent color difference corresponding to a device-independent color difference (allowable color difference value) allowable for the target gray, the TRC generation unit 15 corrects the tone value such that an updated gray based on the tone value in the second state becomes the target gray. With this configuration, the occurrence of downtime can be prevented or reduced, while improving the accuracy of color matching without involving a color measurement operation using an external colorimeter. In addition, since whether to perform the correction is determined using a correction threshold, deterioration in accuracy due to overcorrection is less likely to occur.

In the image processing apparatus 1 according to the present embodiment, furthermore, the allowable value setting unit 21 sets, for each paper type, a device-independent allowable color difference value that is allowable for the target gray in response to an operation performed on the input device, and the threshold calculation unit 22 calculates a device-dependent correction threshold from the allowable color difference value set by the allowable value setting unit 21. With this configuration, it is sufficient to set an allowable color difference value (and a correction threshold) for each paper type, and a color measurement operation using an external colorimeter is not involved.

Second Embodiment

An information processing system 100 according to a second embodiment of the present disclosure will be described focusing on differences from the information processing system 100 according to the first embodiment. The first embodiment describes the operation of determining whether to perform the correction by using the correction threshold (the threshold for the RGB color difference) calculated from the allowable color difference value set for each paper type. In the first embodiment, no issues arise provided that the user can set an optimum allowable color difference value for each paper type to be used. However, if it is difficult for the user to determine an appropriate allowable color difference value, the setting may be difficult to optimize. In addition, since the correction threshold also changes when the allowable color difference value changes for each paper type, the correction threshold is stored for each paper type, which is not preferable for operational purposes in terms of the storage capacity of the storage unit 14. It is therefore desirable to perform a determination using a single threshold regardless of the paper type. The second embodiment describes an operation of acquiring the RGB value of paper white of a sheet of paper and normalizing read RGB values of gray patches by using the acquired RGB value of the paper white. This operation can address the issue that an RGB color difference corresponding to a certain Lab color difference is different for each paper type, and thus it is possible to use a single threshold to determine whether to perform the correction for any paper type.

Configuration and Operation of Functional Blocks of Image Processing Apparatus

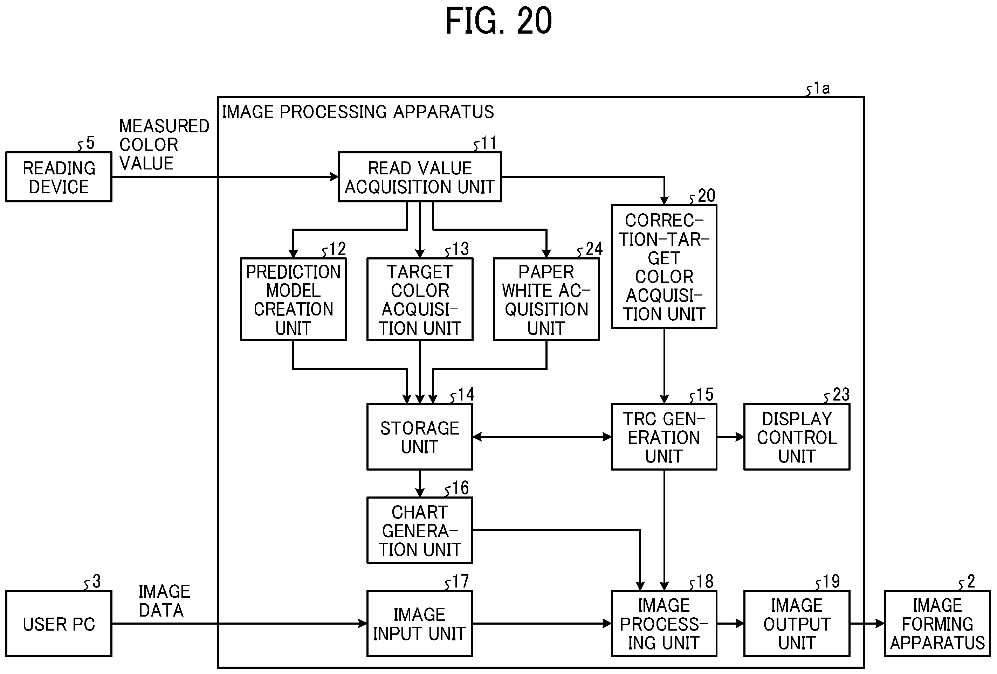

FIG. 20 is a diagram illustrating an example configuration of functional blocks of an image processing apparatus according to the second embodiment of the present disclosure. The configuration and operation of the functional blocks of an image processing apparatus 1a according to the present embodiment will be described with reference to FIG. 20.

As illustrated in FIG. 20, the image processing apparatus 1a includes a read value acquisition unit 11, a prediction model creation unit 12 (an example of a fourth acquisition unit), a target color acquisition unit 13 (an example of a first acquisition unit), a paper white acquisition unit 24 (an example of a third acquisition unit), a storage unit 14, a TRC generation unit 15 (an example of a correction unit), a chart generation unit 16, an image input unit 17, an image processing unit 18, an image output unit 19, a correction-target color acquisition unit 20 (an example of a second acquisition unit), and a display control unit 23. The operations of the read value acquisition unit 11, the prediction model creation unit 12, the target color acquisition unit 13, the storage unit 14, the TRC generation unit 15, the chart generation unit 16, the image input unit 17, the image processing unit 18, the image output unit 19, the correction-target color acquisition unit 20, and the display control unit 23 are as described in the first embodiment described above.

The paper white acquisition unit 24 is a functional unit that acquires the color value of a predetermined paper white reading area (i.e., the color value of paper white) from color values acquired by the read value acquisition unit 11 for a target/neighboring chart 60a described below. The paper white acquisition unit 24 stores the acquired color value of the paper white in the storage unit 14. The paper white acquisition unit 24 is implemented by, for example, the CPU 501 illustrated in FIG. 6 executing a program.

The read value acquisition unit 11, the prediction model creation unit 12, the target color acquisition unit 13, the correction-target color acquisition unit 20, the TRC generation unit 15, the chart generation unit 16, the image input unit 17, the image processing unit 18, the image output unit 19, the display control unit 23, and the paper white acquisition unit 24 of the image processing apparatus 1a illustrated in FIG. 20 are not limited to being implemented by the CPU 501 illustrated in FIG. 6 executing a program. For example, the read value acquisition unit 11, the prediction model creation unit 12, the target color acquisition unit 13, the correction-target color acquisition unit 20, the TRC generation unit 15, the chart generation unit 16, the image input unit 17, the image processing unit 18, the image output unit 19, the display control unit 23, and the paper white acquisition unit 24 of the image processing apparatus 1a illustrated in FIG. 20 may be implemented by hardware such as integrated circuits or by a combination of software and hardware.

The functional units of the image processing apparatus 1a illustrated in FIG. 20 are conceptually illustrated functions and are not limited to the illustrated components. For example, a plurality of functional units that are illustrated as independent functional units of the image processing apparatus 1a illustrated in FIG. 20 may be combined into one functional unit. Alternatively, a function of one of the functional units of the image processing apparatus 1a illustrated in FIG. 20 may be divided into a plurality of functions to form a plurality of functional units. Furthermore, the functional units of the image processing apparatus 1a are not necessarily configured as distinct software modules as the blocks illustrated in FIG. 20 so long as the functions of the functional units are implemented as a whole by the image processing apparatus 1a executing a program.

Target Gray/Neighboring Gray Acquisition Process of Image Processing Apparatus

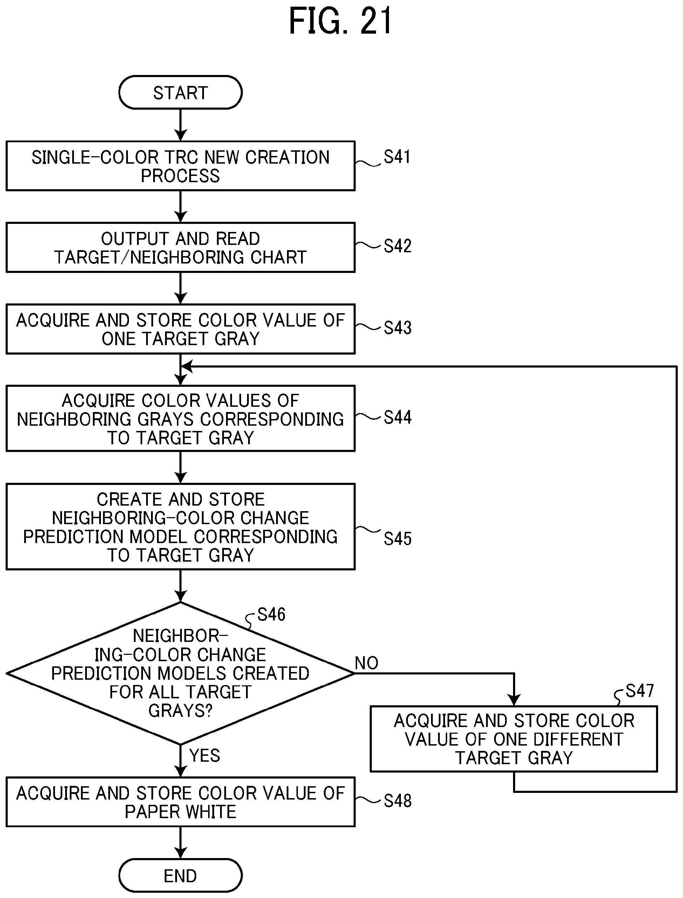

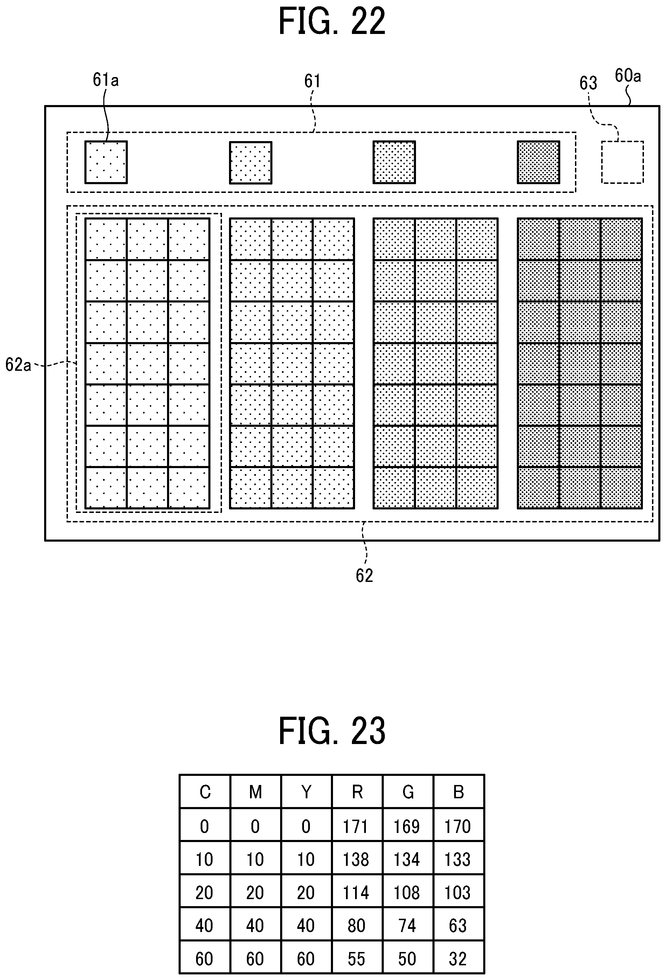

FIG. 21 is a flowchart illustrating an example of a target gray/neighboring gray acquisition process of the image processing apparatus according to the second embodiment of the present disclosure. FIG. 22 is a diagram illustrating an example of a target/neighboring chart according to the second embodiment of the present disclosure. FIG. 23 is a table illustrating an example of tone values and color values of neighboring grays and paper white. The target gray/neighboring gray acquisition process of the image processing apparatus 1a according to the present embodiment will be described with reference to FIGs. 21 to 23.

Step S41

First, the TRC generation unit 15 of the image processing apparatus 1a generates (newly creates) single-color TRCs through the single-color calibration described above. The time of new creation of single-color TRCs corresponds to the "first state" according to the present disclosure. Then, the TRC generation unit 15 stores the generated single-color TRCs in the storage unit 14. The present embodiment is based on the assumption that the tone values have been subjected to tone correction using the single-color TRCs. Thus, the single-color calibration may be implemented in any way. Then, the process proceeds to step S42.

Step S42

Then, the chart generation unit 16 of the image processing apparatus 1a generates a target/neighboring chart 60a (an example of a first chart) as illustrated in, for example, FIG. 22 in accordance with, for example, an operation through the user PC 3.

As illustrated in FIG. 22, the target/neighboring chart 60a includes a patch group 61, a patch group 62, and a paper white reading area 63. The patch group 61 and the patch group 62 are as described in the first embodiment described above.

The paper white reading area 63 has the same size as the size of each patch in the patch groups 61 and 62, and is an area of paper white (i.e., tone value (C, M, Y, K) = (0, 0, 0, 0)) where no patch is printed. The position and size of the paper white reading area 63 are not limited, and the paper white reading area 63 is set as any area where the RGB value can be accurately read. Alternatively, a plurality of paper white reading areas may be set, and the average value of the color values of the paper white reading areas may be used as the RGB value of paper white.

The arrangement of the patches in the target/neighboring chart 60a is also not limited, and each patch is arranged in any location such that the color values of the target grays and the neighboring grays can be accurately measured.

Then, the image processing unit 18 of the image processing apparatus 1a performs color conversion on the target/neighboring chart 60a generated by the chart generation unit 16 by using the single-color TRCs generated by the TRC generation unit 15. The image output unit 19 of the image processing apparatus 1a causes the image forming apparatus 2 to perform printing based on the target/neighboring chart 60a on which the color conversion has been performed. The reading device 5 performs a reading process on the target/neighboring chart 60a that has been printed out. Then, the read value acquisition unit 11 of the image processing apparatus 1a acquires the color values (RGB values) of the patches in the target/neighboring chart 60a and the paper white reading area 63 read by the reading device 5. Then, the process proceeds to step S43.

Steps S43 to S47

The processing of steps S43 to S47 is similar to the processing of steps S13 to S17 illustrated in FIG. 10. FIG. 23 illustrates an example of the tone values of a target gray of interest and paper white, and the color values of the target gray of interest and the paper white. If the neighboring-color change prediction models corresponding to all the target grays have been created in step S46 (step S46: Yes), the process proceeds to step S48. If the neighboring-color change prediction models corresponding to all the target grays have not been created in step S46 (step S46: No), the process proceeds to step S47.

Step S48

The paper white acquisition unit 24 of the image processing apparatus 1a acquires the color value (third color value) of the paper white reading area 63 (the color value of the paper white) from the color values acquired by the read value acquisition unit 11 for the target/neighboring chart 60a. Then, the paper white acquisition unit 24 stores the acquired color value of the paper white in the storage unit 14. Then, the target gray/neighboring gray acquisition process ends.

Gray Correction Process of Image Processing Apparatus

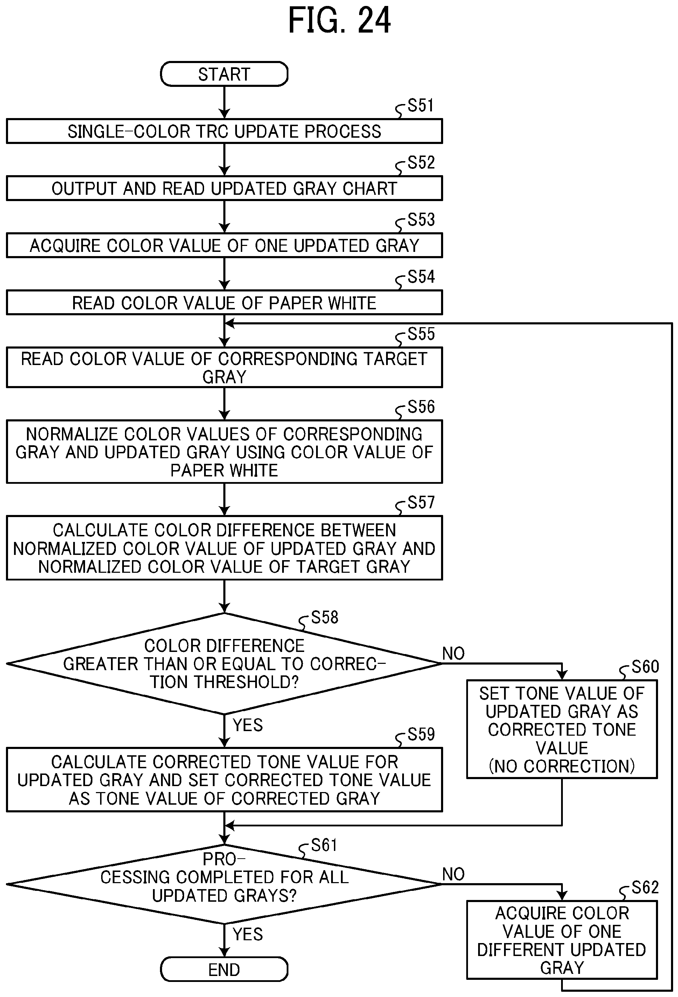

FIG. 24 is a flowchart illustrating an example of a gray correction process of the image processing apparatus according to the second embodiment of the present disclosure. The gray correction process of the image processing apparatus 1a according to the present embodiment will be described with reference to FIG. 24.

Steps S51 to S53

The processing of steps S51 to S53 is similar to the processing of steps S21 to S23 illustrated in FIG. 15. Then, the process proceeds to step S54.

Step S54

The TRC generation unit 15 of the image processing apparatus 1a reads, from the storage unit 14, the color value of the paper white read for the target/neighboring chart 60a. Then, the process proceeds to step S55.

Step S55

The TRC generation unit 15 reads, from the storage unit 14, the color value and the tone value of the target gray corresponding to the updated gray of interest, that is, the color value and the tone value of the target gray having the same tone value as the updated gray of interest. Then, the process proceeds to step S56.

Step S56

The TRC generation unit 15 performs a normalization process on the color value of the updated gray of interest and the color value of the target gray corresponding to the updated gray of interest, with reference to the color value of the paper white. Specifically, the TRC generation unit 15 normalizes the color value of the updated gray of interest and the color value ($RGB_{gray}$) of the target gray corresponding to the updated gray of interest with reference to the color value ($RGB_{white}$) of the paper white by using Equation (1) below to obtain a normalized color value ($RGB_{norm}$).

$$RGB_{norm} = 255 \times RGB_{gray}/RGB_{white} \quad (1)$$

Accordingly, the color values of the updated gray of interest and the target gray are normalized to a value ranging from 0 to 255, with 255 being the maximum value and indicating the color value of the paper white. Then, the process proceeds to step S57.

Step S57

The TRC generation unit 15 calculates a color difference between the normalized color value of the updated gray of interest and the normalized color value of the target gray corresponding to the updated gray of interest. The color difference may be hereinafter also referred to as a normalized color difference. Then, the process proceeds to step S58.

Step S58

The TRC generation unit 15 determines whether the calculated normalized color difference is greater than or equal to a predetermined threshold (correction threshold) set in advance. As described above, normalizing the color values of the updated gray and the target gray using the color value (RGB value) of the paper white can make the RGB color difference corresponding to the Lab color difference common to all paper types as a normalized color difference, and accordingly, whether to perform the correction can be determined using a single threshold (correction threshold).

While normalization is performed using the color value (RGB value) of the paper white, any method may be used so long as normalization can be performed using a reference common to all paper types. For example, instead of the color value of the paper white, a patch having a specific tone value and printed using the target/neighboring chart 60a and the updated gray chart 70 may be used to perform normalization.

Furthermore, the paper white reading area 63 is set in the target/neighboring chart 60a, and the updated gray is also normalized by using the color value of the paper white in the paper white reading area 63 in the target/neighboring chart 60a. However, the present disclosure is not limited to this. For example, a paper white area equivalent to the paper white reading area 63 may also be set in the updated gray chart 70, and the updated gray may be normalized by using the color value of paper white in the paper white area in the updated gray chart 70.

While the threshold (correction threshold) for the normalized RGB color difference corresponding to the Lab color difference is set in advance, the user may be allowed to set one allowable color difference value for a Lab value to be applied to all paper types in common, and the allowable color difference value may be used to calculate a correction threshold for the normalized color difference and to use the correction threshold.

If the normalized color difference is greater than or equal to the correction threshold (step S58: Yes), the process proceeds to step S59. If the normalized color difference is less than the correction threshold (step S58: No), the process proceeds to step S60.

Steps S59 to S62

The processing of steps S59 to S62 is similar to the processing of steps S27 to S30 illustrated in FIG. 15. Then, the gray correction process ends.

As described above, in the image processing apparatus 1a according to the present embodiment, the paper white acquisition unit 24 acquires a device-dependent color value of paper white in a chart in the first state or the second state, and the TRC generation unit 15 normalizes each of the first color value and the second color value with reference to the color value of the paper white and performs a correction when the color difference between the normalized second color value and the normalized first color value is greater than or equal to a correction threshold set in advance. With this configuration, it is possible to determine whether to perform the correction for any paper type by using a single threshold, regardless of the paper type, and to improve user convenience.

In the embodiments described above, as a non-limiting example, a neighboring-color change prediction model is created in the target gray/neighboring gray acquisition process. In one example, in the gray correction process, the updated gray chart 70 including the patch group 62 may be printed out, and a neighboring-color change prediction model may be created. In addition, in the gray correction process, after the correction process is performed once, whether to further perform the correction process may be determined by using the method described above, and then the updated gray chart 70 including the patch group 62 for creating a neighboring-color change prediction model may be output before the correction is performed.

Each of the functions in the embodiments described above may be implemented by one or more processing circuits or circuitry. Examples of the "processing circuits or circuitry" include a programmed processor, as a processor that is mounted on an electronic circuit and that performs the functions through software. Examples of the "processing circuits or circuitry" also include devices such as an ASIC, a digital signal processor (DSP), a field programmable gate array (FPGA), and circuit components of related art designed to execute the recited functions.

In addition, the programs to be executed by the image processing apparatuses 1 and 1a according to the embodiments described above may be configured to be pre-installed in a ROM or the like and provided. The programs to be executed by the image processing apparatuses 1 and 1a according to the embodiments described above may be configured to be recorded in any computer-readable recording medium, such as a compact disc read only memory (CD-ROM), a flexible disk (FD), a CD-R, or a DVD, in an installable or executable file format and provided as a computer program product. In addition, the programs to be executed by the image processing apparatuses 1 and 1a according to the embodiments described above may be configured to be stored in a computer connected to a network such as the Internet and provided by being downloaded via the network. In addition, the programs to be executed by the image processing apparatuses 1 and 1a according to the embodiments described above may be configured to be provided or distributed via a network such as the Internet.

In addition, the programs to be executed by the image processing apparatuses 1 and 1a according to the embodiments described above have module configurations including the functional units described above. In actual hardware, a CPU (or processor) reads the programs from the ROM and executes the read programs to load the functional units described above onto a main storage device and generate the functional units on the main storage device.

Aspects of the present disclosure are as follows.

In a first aspect, an image processing apparatus for performing color matching of tone values acquired for a same target color in two different states includes a first acquisition unit, a second acquisition unit, and a correction unit. The first acquisition unit acquires, from a first chart printed out from an image forming apparatus based on a first tone value of a target mixed color in a first state, a first color value of a patch corresponding to the first tone value read by a reading device included in the image forming apparatus. The first color value is device-dependent. The second acquisition unit acquires, from a second chart printed out from the image forming apparatus based on the first tone value in a second state different from the first state, a second color value of a patch corresponding to the first tone value read by the reading device. The second color value is device-dependent. The correction unit corrects the first tone value such that a mixed color based on the first tone value in the second state becomes the target mixed color, when a color difference between the second color value and the first color value is greater than or equal to a threshold set as a device-dependent color difference corresponding to a device-independent color difference allowable for the target mixed color.

According to a second aspect, in the image processing apparatus of the first aspect, the threshold is set for each paper type.

According to a third aspect, the image processing apparatus of the second aspect further includes a setting unit and a calculation unit. The setting unit sets an allowable color difference value for each paper type in response to an operation performed on an input device. The allowable color difference value is device-independent and allowable for the target mixed color. The calculation unit calculates the threshold that is device-dependent, from the allowable color difference value set by the setting unit.

According to a fourth aspect, the image processing apparatus of the first aspect further includes a third acquisition unit. The third acquisition unit acquires a third color value of paper white in a chart in the first state or the second state. The third color value is device-dependent. The correction unit normalizes each of the first color value and the second color value with reference to the third color value, and corrects the first tone value when a color difference between the normalized second color value and the normalized first color value is greater than or equal to the threshold that is set in advance.

According to a fifth aspect, in the image processing apparatus of any one of the first to fourth aspects, the second state is a state that has changed over time or environmentally from the first state.

According to a sixth aspect, the image processing apparatus of any one of the first to fifth aspects further includes a fourth acquisition unit. The fourth acquisition unit acquires, from a chart printed out from the image forming apparatus based on a plurality of second tone values in a predetermined color gamut range including the first tone value in the first state or the second state, a fourth color value of a patch corresponding to each of the plurality of second tone values read by the reading device. The correction unit sets, as a corrected value for the first tone value, a second tone value among the plurality of second tone values, the second tone value being a tone value for which a difference between the first color value and a value obtained by adding to the second color value a difference between a first predicted color value predicted from the first tone value and a second predicted color value predicted from the second tone value is less than or equal to the threshold.

According to a seventh aspect, in the image processing apparatus of any one of the first to sixth aspects, the device-dependent color value includes an RGB value, and the device-independent color value includes a Lab value.

According to an eighth aspect, in the image processing apparatus of any one of the first to seventh aspects, the target mixed color includes a gray color obtained by mixing cyan, magenta, and yellow.

In a ninth aspect, an information processing system includes the image processing apparatus of any one of the first to eighth aspects, and the above-described image forming apparatus.

In a tenth aspect, an image processing method for an image processing apparatus to perform color matching of tone values acquired for a same target color in two different states includes acquiring, from a first chart printed out from an image forming apparatus based on a first tone value of a target mixed color in a first state, a first color value of a patch corresponding to the first tone value read by a reading device included in the image forming apparatus, the first color value being device-dependent; acquiring, from a second chart printed out from the image forming apparatus based on the first tone value in a second state different from the first state, a second color value of a patch corresponding to the first tone value read by the reading device, the second color value being device-dependent; and correcting the first tone value such that a mixed color based on the first tone value in the second state becomes the target mixed color, when a color difference between the second color value and the first color value is greater than or equal to a threshold set as a device-dependent color difference corresponding to a device-independent color difference allowable for the target mixed color.

In an eleventh aspect, a program causes a computer for performing color matching of tone values acquired for a same target color in two different states to execute acquiring, from a first chart printed out from an image forming apparatus based on a first tone value of a target mixed color in a first state, a first color value of a patch corresponding to the first tone value read by a reading device included in the image forming apparatus, the first color value being device-dependent; acquiring, from a second chart printed out from the image forming apparatus based on the first tone value in a second state different from the first state, a second color value of a patch corresponding to the first tone value read by the reading device, the second color value being device-dependent; and correcting the first tone value such that a mixed color based on the first tone value in the second state becomes the target mixed color, when a color difference between the second color value and the first color value is greater than or equal to a threshold set as a device-dependent color difference corresponding to a device-independent color difference allowable for the target mixed color.

Any one of the above-described operations may be performed in various other ways, for example, in an order different from the one described above.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

**Claims**

1. An image processing apparatus for performing color matching of tone values acquired for a same target color in a first state and a second state different from the first state, the image processing apparatus comprising:

> a first acquisition unit (13) configured to acquire, from a first chart printed out from an image forming apparatus based on a first tone value of a target mixed color in the first state, a first color value of a patch corresponding to the first tone value read by a reading device included in the image forming apparatus, the first color value being device-dependent;
> a second acquisition unit (20) configured to acquire, from a second chart printed out from the image forming apparatus based on the first tone value in the second state, a second color value of a patch corresponding to the first tone value read by the reading device, the second color value being device-dependent; and
> a correction unit (15) configured to correct the first tone value such that a mixed color based on the first tone value in the second state becomes the target mixed color, when a color difference between the second color value and the first color value is greater than or equal to a threshold set as a device-dependent color difference corresponding to a device-independent color difference allowable for the target mixed color.

2. The image processing apparatus according to claim 1, wherein the threshold is set for each paper type.

3. The image processing apparatus according to claim 2, further comprising:

> a setting unit (21) configured to set an allowable color difference value for each paper type in response to an operation performed on an input device, the allowable color difference value being device-independent and allowable for the target mixed color; and
a calculation unit (22) configured to calculate the threshold that is device-dependent, from the set allowable color difference value.

4. The image processing apparatus according to claim 1, further comprising a third acquisition unit (24) configured to acquire a third color value of paper white in a chart in the first state or the second state, the third color value being device-dependent, wherein
the correction unit (15) is configured to:

> normalize each of the first color value and the second color value with reference to the third color value; and
> correct the first tone value when a color difference between the normalized second color value and the normalized first color value is greater than or equal to the threshold that is set in advance.

5. The image processing apparatus according to any one of claims 1 to 4, wherein the second state is a state that has changed over time or environmentally from the first state.

6. The image processing apparatus according to any one of claims 1 to 5, further comprising a fourth acquisition unit (12) configured to acquire, from a chart printed out from the image forming apparatus based on a plurality of second tone values in a predetermined color gamut range including the first tone value in the first state or the second state, a fourth color value of a patch corresponding to each of the plurality of second tone values read by the reading device, wherein
the correction unit (15) is configured to set, as a corrected value for the first tone value, a second tone value among the plurality of second tone values, the second tone value being a tone value for which a difference between the first color value and a value obtained by adding to the second color value a difference between a first predicted color value predicted from the first tone value and a second predicted color value predicted from the second tone value is less than or equal to the threshold.

7. The image processing apparatus according to any one of claims 1 to 6, wherein

> the device-dependent color value includes an RGB value, and
> the device-independent color value includes a Lab value.

8. The image processing apparatus according to any one of claims 1 to 7, wherein the target mixed color includes a gray color obtained by mixing cyan, magenta, and yellow.

9. An information processing system comprising:

the image processing apparatus (1; 1a) according to any one of claims 1 to 8; and
the image forming apparatus configured to print the first chart and the second chart (2).

10. An image processing method for an image processing apparatus to perform color matching of tone values acquired for a same target color in a first state and a second state different from the first state, the image processing method comprising:

acquiring (S13), from a first chart printed out from an image forming apparatus based on a first tone value of a target mixed color in the first state, a first color value of a patch corresponding to the first tone value read by a reading device included in the image forming apparatus, the first color value being device-dependent;
acquiring (S23), from a second chart printed out from the image forming apparatus based on the first tone value in the second state, a second color value of a patch corresponding to the first tone value read by the reading device, the second color value being device-dependent; and
correcting (S27) the first tone value such that a mixed color based on the first tone value in the second state becomes the target mixed color, when a color difference between the second color value and the first color value is greater than or equal to a threshold set as a device-dependent color difference corresponding to a device-independent color difference allowable for the target mixed color.

11. Carrier means carrying computer readable code for controlling a computer system to carry out the method of claim 10.

# FIG. 1

# FIG. 2A

DENSITY

TARGET

MEASURED
DENSITY

0.2

30    50    INPUT TONE
VALUE (%)

# FIG. 2B

OUTPUT TONE
VALUE (%)

SINGLE-COLOR TRC

50

30    INPUT TONE
VALUE (%)

EP 4 683 313 A1

# FIG. 3A

PAPER A

# FIG. 3B

PAPER B

EP 4 683 313 A1

FIG. 4A

FIG. 4B

# FIG. 5

# FIG. 6

IMAGE PROCESSING APPARATUS 1

| 501 | 502 | 503 | 505 | 508 |
|---|---|---|---|---|
| CPU | ROM | RAM | AUXILIARY STORAGE DEVICE | DISPLAY |

510

| 509 | 511 | 512 | 507 | 514 |
|---|---|---|---|---|
| NETWORK I/F | KEYBOARD | MOUSE | MEDIA DRIVE | DVD DRIVE |

506
RE-CORD-ING MEDIUM

513

# FIG. 7

2

303K  303C  303M  303Y

K    C    M    Y

5

304    302

305    301

600

300

# FIG. 8

# FIG. 9

**IMAGE PROCESSING APPARATUS** (1)

READING DEVICE (5) → MEASURED COLOR VALUE → READ VALUE ACQUISITION UNIT (11)

READ VALUE ACQUISITION UNIT (11) → CORRECTION-TARGET COLOR ACQUISITION UNIT (20)

ALLOWABLE VALUE SETTING UNIT (21)

PREDICTION MODEL CREATION UNIT (12)

TARGET COLOR ACQUISITION UNIT (13)

THRESHOLD CALCULATION UNIT (22)

STORAGE UNIT (14)

TRC GENERATION UNIT (15)

DISPLAY CONTROL UNIT (23)

CHART GENERATION UNIT (16)

USER PC (3) → IMAGE DATA → IMAGE INPUT UNIT (17)

IMAGE PROCESSING UNIT (18)

IMAGE OUTPUT UNIT (19)

IMAGE FORMING APPARATUS (2)

# FIG. 10

START

SINGLE-COLOR TRC NEW CREATION PROCESS ⟩~S11

OUTPUT AND READ TARGET/NEIGHBORING CHART ⟩~S12

ACQUIRE AND STORE COLOR VALUE OF ONE TARGET GRAY ⟩~S13

ACQUIRE COLOR VALUES OF NEIGHBORING GRAYS CORRESPONDING TO TARGET GRAY ⟩~S14

CREATE AND STORE NEIGHBORING-COLOR CHANGE PREDICTION MODEL CORRESPONDING TO TARGET GRAY ⟩~S15

NEIGHBOR-ING-COLOR CHANGE PREDICTION MODELS CREATED FOR ALL TARGET GRAYS? ⟨S16

NO

ACQUIRE AND STORE COLOR VALUE OF ONE DIFFERENT TARGET GRAY ⟨S17

YES

SET ALLOWABLE COLOR DIFFERENCE VALUE USING Lab VALUE ⟩~S18

CALCULATE AND STORE SET ALLOWABLE COLOR DIFFERENCE VALUE AS CORRECTION THRESHOLD FOR RGB VALUE ⟩~S19

END

30

# FIG. 11

# FIG. 12

| C | M | Y | R | G | B | ALLOWABLE COLOR DIFFERENCE VALUE | CORRECTION THRESHOLD |
|---|---|---|---|---|---|---|---|
| 10 | 10 | 10 | 138 | 134 | 133 | | |
| 20 | 20 | 20 | 114 | 108 | 103 | 1.2 | 3.7 |
| 40 | 40 | 40 | 80 | 74 | 63 | | |
| 60 | 60 | 60 | 55 | 50 | 32 | | |

# FIG. 13

| TARGET GRAY TONE VALUE | | | NEIGHBORING GRAY TONE VALUE/COLOR VALUE | | | | | |
|---|---|---|---|---|---|---|---|---|
| C | M | Y | C | M | Y | R | G | B |
| 10 | 10 | 10 | 7 | 6 | 5 | 153 | 149 | 150 |
| 10 | 10 | 10 | 7 | 6 | 10 | 153 | 148 | 142 |
| 10 | 10 | 10 | 7 | 6 | 15 | 150 | 145 | 133 |
| 10 | 10 | 10 | 7 | 10 | 5 | 149 | 141 | 144 |
| 10 | 10 | 10 | 7 | 10 | 10 | 147 | 138 | 134 |
| 10 | 10 | 10 | 7 | 10 | 15 | 147 | 137 | 127 |
| 10 | 10 | 10 | 7 | 14 | 5 | 143 | 129 | 121 |
| 10 | 10 | 10 | 7 | 14 | 10 | 145 | 132 | 130 |
| 10 | 10 | 10 | 7 | 14 | 15 | 145 | 133 | 137 |
| 10 | 10 | 10 | 10 | 6 | 5 | 142 | 142 | 140 |
| 10 | 10 | 10 | 10 | 6 | 10 | 138 | 134 | 133 |
| 10 | 10 | 10 | 10 | 6 | 15 | 133 | 125 | 119 |
| 10 | 10 | 10 | 10 | 10 | 5 | 139 | 136 | 142 |
| 10 | 10 | 10 | 10 | 10 | 10 | 136 | 129 | 135 |
| 10 | 10 | 10 | 10 | 10 | 15 | 141 | 140 | 130 |
| 10 | 10 | 10 | 10 | 14 | 5 | 144 | 145 | 149 |
| 10 | 10 | 10 | 10 | 14 | 10 | 137 | 132 | 125 |
| 10 | 10 | 10 | 10 | 14 | 15 | 135 | 127 | 128 |
| 10 | 10 | 10 | 13 | 6 | 5 | 131 | 135 | 129 |
| 10 | 10 | 10 | 13 | 6 | 10 | 124 | 119 | 117 |
| 10 | 10 | 10 | 13 | 6 | 15 | 129 | 129 | 131 |
| 10 | 10 | 10 | 13 | 10 | 5 | 130 | 131 | 140 |
| 10 | 10 | 10 | 13 | 10 | 10 | 133 | 137 | 138 |
| 10 | 10 | 10 | 13 | 10 | 15 | 126 | 122 | 125 |
| 10 | 10 | 10 | 13 | 14 | 5 | 127 | 124 | 133 |
| 10 | 10 | 10 | 13 | 14 | 10 | 134 | 138 | 145 |
| 10 | 10 | 10 | 13 | 14 | 15 | 129 | 128 | 124 |

# FIG. 14

```
┌─────┐      ┌──────────────────┐      ┌─────────┐
│  C  │─────▶│  NEIGHBORING-COLOR│     │  COLOR  │
│  M  │─────▶│ CHANGE PREDICTION │────▶│  VALUE  │
│  Y  │─────▶│      MODEL        │     │         │
└─────┘      └──────────────────┘      └─────────┘
```

# FIG. 15

```
              ( START )
                  │
                  ▼                              ⌐S21
        ┌────────────────────────────────────┐
        │   SINGLE-COLOR TRC UPDATE PROCESS   │
        └────────────────────────────────────┘
                  │                            ⌐S22
                  ▼
        ┌────────────────────────────────────┐
        │   OUTPUT AND READ UPDATED GRAY CHART │
        └────────────────────────────────────┘
                  │                            ⌐S23
                  ▼
        ┌────────────────────────────────────┐
        │ ACQUIRE COLOR VALUE OF ONE UPDATED GRAY │
        └────────────────────────────────────┘
                  │                            ⌐S24
                  ▼
        ┌────────────────────────────────────┐
        │  READ COLOR VALUE OF CORRESPONDING TARGET │
        │                GRAY                 │
        └────────────────────────────────────┘
                  │                            ⌐S25
                  ▼
        ┌────────────────────────────────────┐
        │ CALCULATE COLOR DIFFERENCE BETWEEN COLOR │
        │ VALUE OF UPDATED GRAY AND COLOR VALUE OF │
        │            TARGET GRAY               │
        └────────────────────────────────────┘
                  │                            ⌐S26
                  ▼
              ╱─────────────╲        NO
        ╱  COLOR DIFFERENCE   ╲────────────────┐
        ╲ GREATER THAN OR EQUAL TO CORREC-     │
         ╲    TION THRESHOLD?  ╱               │
              ╲─────────────╱                  ▼          ⌐S28
                  │ YES              ┌────────────────────┐
                  │          ⌐S27    │  SET TONE VALUE OF  │
                  ▼                  │  UPDATED GRAY AS    │
        ┌────────────────────────┐  │  CORRECTED TONE     │
        │ CALCULATE CORRECTED TONE VALUE FOR │  VALUE      │
        │ UPDATED GRAY AND SET CORRECTED TONE VALUE │ (NO CORRECTION) │
        │ AS TONE VALUE OF CORRECTED GRAY │ └──────────┘
        └────────────────────────┘
                  │                  │
                  ▼◀─────────────────┘
              ╱─────────────╲    ⌐S29
        ╱      PRO-           ╲      NO
        ╲ CESSING COMPLETED FOR ALL ╲──────────┐
         ╲   UPDATED GRAYS?   ╱                │        ⌐S30
              ╲─────────────╱                  ▼
                  │ YES              ┌────────────────────┐
                  ▼                  │   ACQUIRE COLOR     │
              ( END )                │ VALUE OF ONE DIFFER-│
                                     │ ENT UPDATED GRAY    │
                                     └────────────────────┘
```

# FIG. 16

# FIG. 17

START

READ NEIGHBORING-COLOR CHANGE PREDICTION MODEL CORRESPONDING TO UPDATED GRAY TONE VALUE FROM STORAGE UNIT — S271

SELECT ANY ONE TONE VALUE IN RANGE OF NEIGHBORING-COLOR CHANGE PREDICTION MODEL — S272

CALCULATE MODEL PREDICTED COLOR VALUE CORRESPONDING TO UPDATED GRAY TONE VALUE AND MODEL PREDICTED COLOR VALUE CORRESPONDING TO SELECTED TONE VALUE — S273

CALCULATE DIFFERENCE VALUE BETWEEN MODEL PREDICTED COLOR VALUE OF UPDATED GRAY AND MODEL PREDICTED COLOR VALUE OF SELECTED TONE VALUE — S274

ADD DIFFERENCE VALUE TO COLOR VALUE OF UPDATED GRAY AND CALCULATE PREDICTED COLOR VALUE — S275

CALCULATE COLOR DIFFERENCE BETWEEN COLOR VALUE OF TARGET GRAY CORRESPONDING TO UPDATED GRAY AND PREDICTED COLOR VALUE — S276

COLOR DIFFERENCE LESS THAN OR EQUAL TO CORRECTION THRESHOLD? — S277

NO → SELECT ANY ONE DIFFERENT TONE VALUE IN RANGE OF NEIGHBORING-COLOR CHANGE PREDICTION MODEL — S279

YES

CALCULATE SELECTED TONE VALUE AS CORRECTED TONE VALUE FOR UPDATED GRAY AND SET SELECTED TONE VALUE AS TONE VALUE OF CORRECTED GRAY — S278

END

# FIG. 18

$(C\alpha, M\alpha, Y\alpha)$ →

$(Ct, Mt, Yt)$ →

[NEIGHBOR-ING-COLOR CHANGE PREDICTION MODEL]

→ $(R2, G2, B2)$

→ $(R1, G1, B1)$

→ $(\triangle R12, \triangle G12, \triangle B12) = (R2 - R1, G2 - G1, B2 - B1)$

5

[READING DEVICE]

(NEW CREATION TIME) → $(Rt, Gt, Bt)$ ←----

(UPDATE TIME) → $(Rm, Gm, Bm)$ → ⊕ → $(Rm + \triangle R12, Gm + \triangle G12, Bm + \triangle B12)$

CALCULATE COLOR DIFFERENCE

# FIG. 19

| TARGET GRAY TONE VALUE | | | CORRECTED TONE VALUE | | |
|---|---|---|---|---|---|
| C | M | Y | C | M | Y |
| 10 | 10 | 10 | 11.67 | 12.03 | 9.88 |
| 20 | 20 | 20 | 20 | 20 | 20 |
| 40 | 40 | 40 | 42.47 | 44.35 | 40.86 |
| 60 | 60 | 60 | 64.19 | 65.98 | 61.43 |

# FIG. 20

IMAGE PROCESSING APPARATUS — 1a

READING DEVICE — 5

MEASURED COLOR VALUE

READ VALUE ACQUISITION UNIT — 11

PREDICTION MODEL CREATION UNIT — 12

TARGET COLOR ACQUISITION UNIT — 13

PAPER WHITE ACQUISITION UNIT — 24

CORRECTION-TARGET COLOR ACQUISITION UNIT — 20

STORAGE UNIT — 14

TRC GENERATION UNIT — 15

DISPLAY CONTROL UNIT — 23

CHART GENERATION UNIT — 16

USER PC — 3

IMAGE DATA

IMAGE INPUT UNIT — 17

IMAGE PROCESSING UNIT — 18

IMAGE OUTPUT UNIT — 19

IMAGE FORMING APPARATUS — 2

EP 4 683 313 A1

# FIG. 21

```
                    ┌─────────┐
                    │  START  │
                    └─────────┘
                         │
                         ▼
        ┌──────────────────────────────────┐
        │  SINGLE-COLOR TRC NEW CREATION   │───S41
        │             PROCESS              │
        └──────────────────────────────────┘
                         │
                         ▼
        ┌──────────────────────────────────┐
        │        OUTPUT AND READ           │───S42
        │   TARGET/NEIGHBORING CHART       │
        └──────────────────────────────────┘
                         │
                         ▼
        ┌──────────────────────────────────┐
        │  ACQUIRE AND STORE COLOR VALUE OF│───S43
        │         ONE TARGET GRAY          │
        └──────────────────────────────────┘
                         │
                         ▼
        ┌──────────────────────────────────┐
        │      ACQUIRE COLOR VALUES OF     │───S44
        │ NEIGHBORING GRAYS CORRESPONDING  │
        │          TO TARGET GRAY          │
        └──────────────────────────────────┘
                         │
                         ▼
        ┌──────────────────────────────────┐
        │          CREATE AND STORE        │
        │    NEIGHBORING-COLOR CHANGE      │───S45
        │  PREDICTION MODEL CORRESPONDING  │
        │          TO TARGET GRAY          │
        └──────────────────────────────────┘
                         │
                         ▼
                    ╱─────────╲  S46
                   ╱ NEIGHBOR- ╲
                  ╱ ING-COLOR   ╲
                 ╱ CHANGE        ╲  NO
                ╱ PREDICTION      ╲──────────┐
                ╲ MODELS CREATED  ╱          │
                 ╲ FOR ALL TARGET╱           ▼
                  ╲   GRAYS?    ╱   ┌──────────────────────┐
                   ╲──────────╱     │ ACQUIRE AND STORE    │──S47
                        │ YES       │ COLOR VALUE OF ONE   │
                        ▼           │ DIFFERENT TARGET GRAY│
        ┌──────────────────────────┐└──────────────────────┘
        │ ACQUIRE AND STORE COLOR  │──S48
        │ VALUE OF PAPER WHITE     │
        └──────────────────────────┘
                        │
                        ▼
                   ┌─────────┐
                   │   END   │
                   └─────────┘
```

# FIG. 22

# FIG. 23

| C | M | Y | R | G | B |
|---|---|---|---|---|---|
| 0 | 0 | 0 | 171 | 169 | 170 |
| 10 | 10 | 10 | 138 | 134 | 133 |
| 20 | 20 | 20 | 114 | 108 | 103 |
| 40 | 40 | 40 | 80 | 74 | 63 |
| 60 | 60 | 60 | 55 | 50 | 32 |

# FIG. 24

START

S51
SINGLE-COLOR TRC UPDATE PROCESS

S52
OUTPUT AND READ UPDATED GRAY CHART

S53
ACQUIRE COLOR VALUE OF ONE UPDATED GRAY

S54
READ COLOR VALUE OF PAPER WHITE

S55
READ COLOR VALUE OF CORRESPONDING TARGET GRAY

S56
NORMALIZE COLOR VALUES OF CORRESPONDING GRAY AND UPDATED GRAY USING COLOR VALUE OF PAPER WHITE

S57
CALCULATE COLOR DIFFERENCE BETWEEN NORMALIZED COLOR VALUE OF UPDATED GRAY AND NORMALIZED COLOR VALUE OF TARGET GRAY

S58
COLOR DIFFERENCE GREATER THAN OR EQUAL TO CORRECTION THRESHOLD?

NO

S60
SET TONE VALUE OF UPDATED GRAY AS CORRECTED TONE VALUE (NO CORRECTION)

YES

S59
CALCULATE CORRECTED TONE VALUE FOR UPDATED GRAY AND SET CORRECTED TONE VALUE AS TONE VALUE OF CORRECTED GRAY

S61
PRO-CESSING COMPLETED FOR ALL UPDATED GRAYS?

NO

S62
ACQUIRE COLOR VALUE OF ONE DIFFERENT UPDATED GRAY

YES

END

**EUROPEAN SEARCH REPORT**

Europäisches
Patentamt
European
Patent Office
Office européen
des brevets

Application Number

EP 25 18 8298

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 4 171 004 A1 (RICOH CO LTD [JP]) 26 April 2023 (2023-04-26) | 1,4-11 | INV. H04N1/60 |
| A | * paragraph [0054] - paragraph [0065]; claims 1, 2; figures 1, 4 * | 2,3 | |
| | ----- | | |
| Y | US 2006/164700 A1 (HAYASHI KOJI [JP]) 27 July 2006 (2006-07-27) | 1,4-11 | |
| A | * paragraph [0240] - paragraph [0251] * | 2,3 | |
| | ----- | | |
| A | US 2017/280022 A1 (KUROIWA TOMOKO [JP]) 28 September 2017 (2017-09-28) * figure 1 * | 1-11 | |
| | ----- | | |

TECHNICAL FIELDS
SEARCHED (IPC)

H04N

The present search report has been drawn up for all claims

| Place of search | Date of completion of the search | Examiner |
|---|---|---|
| The Hague | 30 November 2025 | Lauritzen, Jan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## ANNEX TO THE EUROPEAN SEARCH REPORT
## ON EUROPEAN PATENT APPLICATION NO.

EP 25 18 8298

This annex lists the patent family members relating to the patent documents cited in the above-mentioned European search report.
The members are as contained in the European Patent Office EDP file on
The European Patent Office is in no way liable for these particulars which are merely given for the purpose of information.

30-11-2025

| Patent document cited in search report | | Publication date | Patent family member(s) | | Publication date |
|---|---|---|---|---|---|
| EP 4171004 | A1 | 26-04-2023 | EP | 4171004 A1 | 26-04-2023 |
| | | | JP | 7743754 B2 | 25-09-2025 |
| | | | JP | 2023061208 A | 01-05-2023 |
| | | | US | 2023120180 A1 | 20-04-2023 |
| US 2006164700 | A1 | 27-07-2006 | JP | 4607723 B2 | 05-01-2011 |
| | | | JP | 2006238408 A | 07-09-2006 |
| | | | US | 2006164700 A1 | 27-07-2006 |
| US 2017280022 | A1 | 28-09-2017 | CN | 107231506 A | 03-10-2017 |
| | | | JP | 6699276 B2 | 27-05-2020 |
| | | | JP | 2017175318 A | 28-09-2017 |
| | | | US | 2017280022 A1 | 28-09-2017 |

EPO FORM P0459

For more details about this annex : see Official Journal of the European Patent Office, No. 12/82

**REFERENCES CITED IN THE DESCRIPTION**

**Patent documents cited in the description**

- JP 2017219753 A